# EUROPEAN PATENT APPLICATION

(11) **EP 4 472 323 A1**
(43) Date of publication of application: **04.12.2024**
(21) Application number: 23746426.8
(22) Date of filing: 29.01.2023
(51) Int. Cl.: H04W 72/543

(54) **QOS CONTROL METHOD AND COMMUNICATION DEVICE**

(30) Priority: 29.01.2022 CN 202210112973; 30.01.2022 CN 202210114124
(71) Applicant: VIVO MOBILE COMMUNICATION CO., LTD., Dongguan, Guangdong 523863 (CN)
(72) Inventor: KE, Xiaowan, Dongguan, Guangdong 523863 (CN)
(74) Representative: Lavoix
(86) International application number: PCT/CN2023/073655
(87) International publication number: WO 2023/143549

(57) **Abstract**

This application discloses a QoS control method and a communication device. The QoS control method applied to a first communication device includes: obtaining, by a first communication device, first information, where the first information includes at least one of the following: a round-trip delay requirement for a service, an uplink delay requirement for a service, a downlink delay requirement for a service, a first delay requirement for a service, and first indication information of a service; and performing, by the first communication device, a first operation according to the first information.

## Description

### CROSS-REFERENCE TO RELATED APPLICATIONS

This application claims priority to Chinese Patent Application No. 202210112973.9 filed in China on January 29, 2022, and to Chinese Patent Application No. 202210114124.7 filed in China on January 30, 2022, which are incorporated herein by reference in their entireties.

### TECHNICAL FIELD

Embodiments of this application relate to the field of wireless communications technologies, and in particular, to a QoS control method and a communication device.

### BACKGROUND

For services in existing networks, uplink and downlink delays of the service are unbalanced. How to implement round-trip delay guarantee is a technical problem to be resolved urgently at present.

### SUMMARY

Embodiments of this application provide a QoS control method and a communication device, so as to resolve the problem of how to implement round-trip delay guarantee in a wireless communication network.

In order to resolve the foregoing technical problem, this application is implemented as follows:

According to a first aspect, an embodiment of this application provides a QoS control method, including:
obtaining, by a first communication device, first information, where the first information includes at least one of the following: a round-trip delay requirement for a service, an uplink delay requirement for a service, a downlink delay requirement for a service, a first delay requirement for a service, and first indication information of a service; and
performing, by the first communication device, a first operation according to the first information, where the first operation includes at least one of the following:
   mapping a first channel for a data flow of the service, where the first channel is usable for transmitting uplink data and/or downlink data of the service;
   determining QoS requirement related information of the first channel;
   determining first related information of a QoS requirement for the service data flow;
   mapping a second channel and/or mapping a third channel for the data flow of the service, where the second channel is used for transmitting uplink data of the service and the third channel is used for transmitting downlink data of the service;
   determining QoS requirement related information of the second channel and/or determining QoS requirement related information of the third channel;
   determining second related information of a QoS requirement for the service data flow, and/or determining third related information of a QoS requirement for the service data flow;
   determining a delay monitoring requirement, including at least one of the following: determining a delay monitoring requirement of the first channel, determining a delay monitoring requirement of the second channel, determining a delay monitoring requirement of the third channel, and determining a delay monitoring requirement of the data flow of the service;
   determining an uplink delay requirement for the service and a downlink delay requirement for the service according to a round-trip delay requirement for the service, where a sum of the uplink delay requirement and the downlink delay requirement for the service does not exceed the round-trip delay requirement for the service;
   using a value of half of the round-trip delay requirement for the service as the first delay requirement for the service;
   performing mapping of a first QoS identifier based on the value of half of the round-trip delay requirement for the service;
   using a value twice the first delay requirement for the service as the round-trip delay requirement for the service;
   determining first indication information of the service; and
   sending second information, where the second information includes at least one of the following: the QoS requirement related information of the first channel, the first related information of the QoS requirement for the service data flow, the QoS requirement related information of the second channel, the second related information of the QoS requirement for the service data flow, the QoS requirement related information of the third channel, the third related information of the QoS requirement for the service data flow, a delay monitoring requirement, and a related requirement for the service; where
   the related requirement for the service includes at least one of the following: description information of the service, the round-trip delay requirement for the service, the uplink delay requirement for the service, the downlink delay requirement for the service, the first delay requirement for the service, and the first indication information of the service.

According to a second aspect, an embodiment of this application provides a QoS control method, including:
sending, by a second communication device, first information; where
the first information includes at least one of the following: a round-trip delay requirement for a service, an uplink delay requirement for a service, a downlink delay requirement for a service, a first delay requirement for a service, and first indication information of a service.

According to a third aspect, an embodiment of this application provides a QoS control method, including:
obtaining, by a third communication device, second information, where the second information includes at least one of the following: QoS requirement related information of a first channel, first related information of a QoS requirement for a service data flow, QoS requirement related information of a second channel, second related information of the QoS requirement for the service data flow, QoS requirement related information of a third channel, third related information of the QoS requirement for the service data flow, a delay monitoring requirement, and a related requirement for the service; and
performing, by the third communication device, a second operation according to the second information, where the second operation includes at least one of the following:
   mapping the first channel for the data flow of the service, where the first channel is usable for transmitting uplink data and/or downlink data of the service;
   determining QoS configuration related information of the first channel;
   mapping the second channel and/or the third channel for the data flow of the service, where the second channel is used for transmitting uplink data of the service and the third channel is used for transmitting downlink data of the service;
   determining QoS configuration related information of the second channel;
   determining QoS configuration related information of the third channel;
   determining a delay monitoring configuration, including at least one of the following: determining a delay monitoring configuration of the first channel, determining a delay monitoring configuration of the second channel, determining a delay monitoring configuration of the third channel, and determining a delay monitoring configuration of the data flow of the service;
   determining a QoS configuration of a second object; and
   sending fourth information, where the fourth information includes at least one of the following: QoS configuration related information of the first channel, QoS configuration related information of the second channel, QoS configuration related information of the third channel, the delay monitoring configuration, and the QoS configuration of the second object; where
   the QoS configuration of the second object includes at least one of the following: a round-trip delay configuration of the second object, a first delay configuration of the second object, and second indication information of the second object.

According to a fourth aspect, an embodiment of this application provides a QoS control method, including:
obtaining, by a fourth communication device, second information or fourth information; and
performing, by the fourth communication device, a fourth operation according to the fourth information, where the fourth operation includes at least one of the following:
   a related operation of a first channel; and
   a related operation of a second channel and/or a third channel;
   where
   the second information includes at least one of the following: QoS requirement related information of the first channel, first related information of a QoS requirement for a service data flow, QoS requirement related information of the second channel, second related information of the QoS requirement for the service data flow, QoS requirement related information of the third channel, third related information of the QoS requirement for the service data flow, a delay monitoring requirement, and a related requirement for the service; and
   the fourth information includes at least one of the following: QoS configuration related information of the first channel, QoS configuration related information of the second channel, QoS configuration related information of the third channel, a delay monitoring configuration, and a QoS configuration of a second object; where
   the related operation of the first channel includes at least one of the following:
      guaranteeing that a round-trip delay overhead of data of the first channel does not exceed twice a first delay budget or does not exceed a round-trip delay budget;
      in a case that an uplink delay overhead exceeds an uplink delay budget or the first delay budget, guaranteeing that a sum of an uplink delay overhead and a downlink delay overhead of the first channel does not exceed a round-trip delay budget of the first channel;
      in a case that the downlink delay overhead exceeds a downlink delay budget or the first delay budget, guaranteeing that the sum of the uplink delay overhead and the downlink delay overhead of the first channel does not exceed the round-trip delay budget of the first channel;
      guaranteeing an uplink delay overhead based on an uplink delay budget of the first channel, where the uplink delay budget is at least one of the following: an uplink delay configuration in a first QoS configuration, an uplink delay budget mapped by an uplink QoS identifier, an uplink delay budget mapped by a first QoS identifier, a value obtained through the round-trip delay budget minus a downlink delay average overhead, and a value obtained through twice the first delay budget minus the downlink delay average overhead;
      guaranteeing a downlink delay overhead based on a downlink delay budget of the first channel, where the downlink delay budget is at least one of the following: a downlink delay configuration in the first QoS configuration, an uplink delay budget mapped by a downlink QoS identifier, a downlink delay budget mapped by a first QoS identifier, a value obtained through the round-trip delay budget minus an uplink delay average overhead, and a value obtained through twice the first delay budget minus the uplink delay average overhead;
      performing resource allocation and data scheduling according to the first QoS configuration; and
      mapping the data flow of the service to a first data channel; where
      the related operation of the second channel and/or the third channel includes at least one of the following:
         guaranteeing that a sum of a delay overhead of the second channel and a delay overhead of the third channel does not exceed twice a first delay budget of the second object, or does not exceed a round-trip delay budget of the second object;
         in a case that an overhead of the second channel exceeds a delay budget of the second channel, guaranteeing that the sum of the delay overhead of the second channel and the delay overhead of the third channel does not exceed the round-trip delay budget of the second object;
         in a case that a delay overhead of the third channel exceeds a delay budget of the third channel, guaranteeing that a sum of the uplink delay overhead of the first channel and the delay overhead of the third channel does not exceed the round-trip delay budget of the second object;
         performing resource allocation and data scheduling according to the first QoS configuration;
         mapping uplink data of the service to a second data channel; and
         mapping downlink data of the service to a third data channel.

According to a fifth aspect, an embodiment of this application provides a QoS control method, including:
obtaining, by a fifth communication device, fifth information, where the fifth information includes a result of delay monitoring;
performing, by the fifth communication device, a fifth operation according to the fifth information, where the fifth operation includes at least one of the following:
   generating or updating an uplink delay requirement and/or a downlink delay requirement for a service data flow;
   generating or updating an uplink delay budget and/or a downlink delay budget of a first channel; and
   generating or updating a delay budget of a second channel and/or a delay budget of a third channel;
   where
   the first channel is usable for transmitting uplink data and/or downlink data of the service;
   the second channel is used for transmitting the uplink data of the service; and
   the third channel is used for transmitting the downlink data of the service.

According to a sixth aspect, an embodiment of this application provides a communication device, where the communication device is a first communication device, including:
a first obtaining module, configured to obtain first information, where the first information includes at least one of the following: a round-trip delay requirement for a service, an uplink delay requirement for a service, a downlink delay requirement for a service, a first delay requirement for a service, and first indication information of a service; and
a first processing module, configured to perform a first operation according to the first information, where the first operation includes at least one of the following:
   mapping a first channel for a data flow of the service, where the first channel is usable for transmitting uplink data and/or downlink data of the service;
   determining QoS requirement related information of the first channel;
   determining first related information of a QoS requirement for the service data flow;
   mapping a second channel and/or mapping a third channel for the data flow of the service, where the second channel is used for transmitting uplink data of the service and the third channel is used for transmitting downlink data of the service;
   determining QoS requirement related information of the second channel and/or determining QoS requirement related information of the third channel;
   determining second related information of a QoS requirement for the service data flow, and/or determining third related information of a QoS requirement for the service data flow;
   determining a delay monitoring requirement, including at least one of the following: determining a delay monitoring requirement of the first channel, determining a delay monitoring requirement of the second channel, determining a delay monitoring requirement of the third channel, and determining a delay monitoring requirement of the data flow of the service;
   determining an uplink delay requirement for the service and a downlink delay requirement for the service according to a round-trip delay requirement for the service, where a sum of the uplink delay requirement and the downlink delay requirement for the service does not exceed the round-trip delay requirement for the service;
   using a value of half of the round-trip delay requirement for the service as the first delay requirement for the service;
   performing mapping of a first QoS identifier based on the value of half of the round-trip delay requirement for the service;
   using a value twice the first delay requirement for the service as the round-trip delay requirement for the service;
   determining first indication information of the service; and
   sending second information, where the second information includes at least one of the following: the QoS requirement related information of the first channel, the first related information of the QoS requirement for the service data flow, the QoS requirement related information of the second channel, the second related information of the QoS requirement for the service data flow, the QoS requirement related information of the third channel, the third related information of the QoS requirement for the service data flow, a delay monitoring requirement, and a related requirement for the service; where
   the related requirement for the service includes at least one of the following: description information of the service, the round-trip delay requirement for the service, the uplink delay requirement for the service, the downlink delay requirement for the service, the first delay requirement for the service, and the first indication information of the service.

According to a seventh aspect, an embodiment of this application provides a communication device, where the communication device is a second communication device, including:
a sending module, configured to send first information; where
the first information includes at least one of the following: a round-trip delay requirement for a service, an uplink delay requirement for a service, a downlink delay requirement for a service, a first delay requirement for a service, and first indication information of a service.

According to an eighth aspect, an embodiment of this application provides a communication device, where the communication device is a third communication device, including:
a second obtaining module, configured to obtain second information, where the second information includes at least one of the following: QoS requirement related information of a first channel, first related information of a QoS requirement for a service data flow, QoS requirement related information of a second channel, second related information of the QoS requirement for the service data flow, QoS requirement related information of a third channel, third related information of the QoS requirement for the service data flow, a delay monitoring requirement, and a related requirement for the service; and
a second processing module, configured to perform a second operation according to the second information, where the second operation includes at least one of the following:
   mapping the first channel for the data flow of the service, where the first channel is usable for transmitting uplink data and/or downlink data of the service;
   determining QoS configuration related information of the first channel;
   mapping the second channel and/or the third channel for the data flow of the service, where the second channel is used for transmitting uplink data of the service and the third channel is used for transmitting downlink data of the service;
   determining QoS configuration related information of the second channel;
   determining QoS configuration related information of the third channel;
   determining a delay monitoring configuration, including at least one of the following: determining a delay monitoring configuration of the first channel, determining a delay monitoring configuration of the second channel, determining a delay monitoring configuration of the third channel, and determining a delay monitoring configuration of the data flow of the service;
   determining a QoS configuration of a second object; and
   sending fourth information, where the fourth information includes at least one of the following: QoS configuration related information of the first channel, QoS configuration related information of the second channel, QoS configuration related information of the third channel, the delay monitoring configuration, and the QoS configuration of the second object; where
   the QoS configuration of the second object includes at least one of the following: a round-trip delay configuration of the second object, a first delay configuration of the second object, and second indication information of the second object.

According to a ninth aspect, an embodiment of this application provides a communication device, and the communication device is a fourth communication device, including:
a third obtaining module, configured to obtain second information or fourth information; and
a third processing module, configured to perform a fourth operation according to the fourth information, where the fourth operation includes at least one of the following:
   a related operation of a first channel; and
   a related operation of a second channel and/or a third channel;
   where
   the second information includes at least one of the following: QoS requirement related information of the first channel, first related information of a QoS requirement for a service data flow, QoS requirement related information of the second channel, second related information of the QoS requirement for the service data flow, QoS requirement related information of the third channel, third related information of the QoS requirement for the service data flow, a delay monitoring requirement, and a related requirement for the service; and
   the fourth information includes at least one of the following: QoS configuration related information of the first channel, QoS configuration related information of the second channel, QoS configuration related information of the third channel, a delay monitoring configuration, and a QoS configuration of a second object; where
   the related operation of the first channel includes at least one of the following:
      guaranteeing that a round-trip delay overhead of data of the first channel does not exceed twice a first delay budget or does not exceed a round-trip delay budget;
      in a case that an uplink delay overhead exceeds an uplink delay budget or the first delay budget, guaranteeing that a sum of an uplink delay overhead and a downlink delay overhead of the first channel does not exceed a round-trip delay budget of the first channel;
      in a case that the downlink delay overhead exceeds a downlink delay budget or the first delay budget, guaranteeing that the sum of the uplink delay overhead and the downlink delay overhead of the first channel does not exceed the round-trip delay budget of the first channel;
      guaranteeing an uplink delay overhead based on an uplink delay budget of the first channel, where the uplink delay budget is at least one of the following: an uplink delay configuration in a first QoS configuration, an uplink delay budget mapped by an uplink QoS identifier, an uplink delay budget mapped by a first QoS identifier, a value obtained through the round-trip delay budget minus a downlink delay average overhead, and a value obtained through twice the first delay budget minus the downlink delay average overhead;
      guaranteeing a downlink delay overhead based on a downlink delay budget of the first channel, where the downlink delay budget is at least one of the following: a downlink delay configuration in the first QoS configuration, an uplink delay budget mapped by a downlink QoS identifier, a downlink delay budget mapped by a first QoS identifier, a value obtained through the round-trip delay budget minus an uplink delay average overhead, and a value obtained through twice the first delay budget minus the uplink delay average overhead;
      performing resource allocation and data scheduling according to the first QoS configuration;
      mapping the data flow of the service to a first data channel; where
      the related operation of the second channel and/or the third channel includes at least one of the following:
         guaranteeing that a sum of a delay overhead of the second channel and a delay overhead of the third channel does not exceed twice a first delay budget of the second object, or does not exceed a round-trip delay budget of the second object;
         in a case that an overhead of the second channel exceeds a delay budget of the second channel, guaranteeing that the sum of the delay overhead of the second channel and the delay overhead of the third channel does not exceed the round-trip delay budget of the second object;
         in a case that a delay overhead of the third channel exceeds a delay budget of the third channel, guaranteeing that a sum of the uplink delay overhead of the first channel and the delay overhead of the third channel does not exceed the round-trip delay budget of the second object;
         performing resource allocation and data scheduling according to the first QoS configuration;
         mapping uplink data of the service to a second data channel; and
         mapping downlink data of the service to a third data channel.

According to a tenth aspect, an embodiment of this application provides a communication device, where the communication device is a fifth communication device, including:
a fourth obtaining module, configured to obtain fifth information, where the fifth information includes a result of delay monitoring; and
a fourth processing module, configured to perform a fifth operation according to the fifth information, where the fifth operation includes at least one of the following:
   generating or updating an uplink delay requirement and/or a downlink delay requirement for a service data flow;
   generating or updating an uplink delay budget and/or a downlink delay budget of a first channel; and
   generating or updating a delay budget of a second channel and/or a delay budget of a third channel;
   where
   the first channel is usable for transmitting uplink data and/or downlink data of the service;
   the second channel is used for transmitting the uplink data of the service; and
   the third channel is used for transmitting the downlink data of the service.

According to an eleventh aspect, an embodiment of this application provides a communication device, including a processor, a memory, and a computer program stored on the memory and capable of running on the processor. When the computer program is executed by the processor, the steps of the QoS control method according to the first aspect are implemented, or the steps of the QoS control method according to the second aspect are implemented, or the steps of the QoS control method according to the third aspect are implemented, or the steps of the QoS control method according to the fourth aspect are implemented, or the steps of the QoS control method according to the fifth aspect are implemented.

According to a twelfth aspect, an embodiment of this application provides a readable storage medium, where a computer program is stored in the computer-readable storage medium, and when the computer program is executed by a processor, the steps of the QoS control method according to the first aspect are implemented, or the steps of the QoS control method according to the second aspect are implemented, or the steps of the QoS control method according to the third aspect are implemented, or the steps of the QoS control method according to the fourth aspect are implemented, or the steps of the QoS control method according to the fifth aspect are implemented.

According to a thirteenth aspect, a communication device is provided, including a processor and a communication interface, where the processor is configured to implement the steps of the QoS control method according to the first aspect, or the steps of the QoS control method according to the second aspect, or the steps of the QoS control method according to the third aspect, or the steps of the QoS control method according to the fourth aspect, or the steps of the QoS control method according to the fifth aspect.

According to a fourteenth aspect, a QoS control system is provided, including at least one of the following: a first communication device, a second communication device, a third communication device, a fourth communication device, a fifth communication device. The first communication device may be configured to perform the steps of the QoS control method according to the first aspect, the second communication device may be configured to perform the steps of the QoS control method according to the second aspect, the third communication device may be configured to perform the steps of the QoS control method according to the third aspect, the fourth communication device may be configured to perform the steps of the QoS control method according to the fourth aspect, and the fifth communication device may be configured to perform the steps of the QoS control method according to the fifth aspect.

According to a fifteenth aspect, a chip is provided, where the chip includes a processor and a communication interface, the communication interface is coupled to the processor, and the processor is configured to run a program or instructions to implement the steps of the QoS control method according to the first aspect, or the steps of the QoS control method according to the second aspect, or the steps of the QoS control method according to the third aspect, or the steps of the QoS control method according to the fourth aspect, or the steps of the QoS control method according to the fifth aspect.

According to a sixteenth aspect, a computer program/program product is provided, where the computer program/program product is stored in a storage medium, and when the computer program/program product is executed by at least one processor, the steps of the QoS control method according to the first aspect are implemented, or the steps of the QoS control method according to the second aspect are implemented, or the steps of the QoS control method according to the third aspect are implemented, or the steps of the QoS control method according to the fourth aspect are implemented, or the steps of the QoS control method according to the fifth aspect are implemented.

In the embodiments of this application, the first communication device obtains the first information that includes at least one of the round-trip delay requirement for the service, the uplink delay requirement for the service, the downlink delay requirement for the service, the first delay requirement for the service, and the first indication information of the service, and performs the first operation according to the first information, so as to achieve the purpose of round-trip delay guarantee.

### BRIEF DESCRIPTION OF DRAWINGS

Other advantages and benefits will become apparent to those of ordinary skill in the art by reading detailed description of the exemplary embodiments below. The accompanying drawings are merely intended to illustrate the purposes of the preferred implementations, and should not be construed as a limitation on this disclosure. Throughout the accompanying drawings, the same reference numerals represent the same components. In the accompanying drawings:
FIG. 1 is a schematic architectural diagram of a wireless communications system according to an embodiment of this application;
FIG. 2 is a flowchart of a QoS control method according to an embodiment of this application;
FIG. 3 is a flowchart of another QoS control method according to an embodiment of this application;
FIG. 4 is a flowchart of another QoS control method according to an embodiment of this application;
FIG. 5 is a flowchart of another QoS control method according to an embodiment of this application;
FIG. 6 is a flowchart of another QoS control method according to an embodiment of this application;
FIG. 7 is a schematic diagram of an application scenario 1 according to an embodiment of this application;
FIG. 8 is a schematic diagram of an application scenario 2 according to an embodiment of this application;
FIG. 9 is a structural diagram of a communication device according to this application;
FIG. 10 is a structural diagram of another communication device according to this application;
FIG. 11 is a structural diagram of another communication device according to this application;
FIG. 12 is a structural diagram of another communication device according to this application;
FIG. 13 is a structural diagram of another communication device according to this application; and
FIG. 14 is a structural diagram of another communication device according to this application.

### DESCRIPTION OF EMBODIMENTS

The following clearly and completely describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application without creative efforts shall fall within the protection scope of this application.

In the specification and claims of this application, the term "include" and any other variants thereof are intended to cover the non-exclusive inclusion, for example, a process, method, system, product, or device that includes a list of steps or units is not necessarily limited to those expressly listed steps or units, but may include other steps or units not expressly listed or inherent to such a process, method, system, product, or device. In addition, in the specification and claims, the use of "and/or" represents presence of at least one of the connected objects, for example, "A and/or B" indicates the following three cases: A alone, B alone, or both A and B.

In the embodiments of this application, the terms "an example" or "for example" are used to represent an example, an illustration, or a description. Any embodiment or design scheme described as "an example" or "for example" in the embodiments of this application should not be construed as being more preferred or advantageous than other embodiments or design schemes. To be precise, the words such as "an example" or "for example" are intended to present a related concept in a specific manner.

Techniques described in this specification are not limited to a 5th generation (5th-generation, 5G) mobile communications system and a later evolved communications system, and also are not limited to a long term evolution (Long Term Evolution, LTE) or LTE-advanced (LTE-Advanced, LTE-A) system, and may also be applied to various wireless communications systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems.

The terms "system" and "network" are usually used interchangeably. The CDMA system can implement radio technologies such as CDMA2000 and universal terrestrial radio access (Universal Terrestrial Radio Access, UTRA). The UTRA includes wideband CDMA (Wideband Code Division Multiple Access, WCDMA) and other CDMA variants. The TDMA system can implement radio technologies such as the global system for mobile communications (Global System for Mobile Communication, GSM). The OFDMA system can implement radio technologies such as ultra mobile broadband (Ultra Mobile Broadband, UMB), evolved UTRA (Evolution-UTRA, E-UTRA), IEEE 802.11 (Wi-Fi), IEEE 802.16 (WiMAX), IEEE 802.20, and Flash-OFDM. The UTRA and E-UTRA are parts of the universal mobile telecommunications system (Universal Mobile Telecommunications System, UMTS). The LTE and more advanced LTE (such as LTE-A) are new UMTS releases that use the E-UTRA. The UTRA, E-UTRA, UMTS, LTE, LTE-A, and GSM are cited from descriptions of the documentation of the organization named "3rd Generation Partnership Project" (3rd Generation Partnership Project, 3GPP). The CDMA2000 and UMB are cited from descriptions of the documentation of the organization named "3rd Generation Partnership Project 2" (3GPP2). Techniques described in this specification may be used in the aforementioned systems and radio technologies, and can also be used in other systems and radio technologies.

For better understanding of the embodiments of this application, the following technical points are first described.

Requirements for round-trip delay guarantee in media services such as extended reality (Extended Reality, XR) are as follows:

Whether and how to support uplink-downlink transmission coordination to meet a round trip time (Round Trip Time, RTT) requirement between a terminal and an N6 endpoint at a user plane function (User plane Function, UPF).

Certainly, in essence, this is caused by unbalanced uplink and downlink delays of a service. For example, in a gaming service, uplink data packets are relatively small (for example, action packets of a user), and need to be sent to a server as soon as possible to avoid picture jitters, requiring a relatively small delay budget. However, downlink data packets (for example, background pictures and status packets of the game) are relatively large, therefore requiring a relatively large delay budget.

At present, one QoS flow has only one delay budget, and the uplink delay budget is the same as the downlink delay budget. Therefore, to optimize user experience, the following problems still need to be resolved:

How to satisfy a round-trip delay overhead, for example, through uplink and downlink differential delay guarantee, and uplink and downlink delay overheads do not exceed a total round-trip delay.

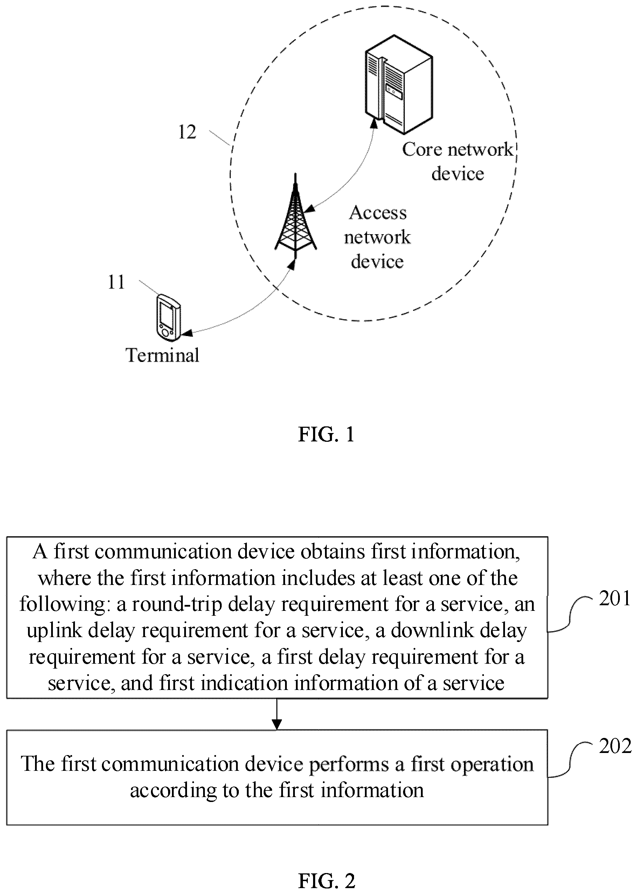

FIG. 1 is a schematic architectural diagram of a wireless communications system according to an embodiment of this application. The wireless communications system includes a terminal 11 and a network-side device 12. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device, WD), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network-side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Networks, WLAN) access point, a wireless fidelity Wi-Fi node, or the like. The base station may be referred to as a NodeB, an evolved NodeB (evolved Node B, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application Function (Application Function, AF), and the like. It should be noted that, in the embodiments of this application, a core network device in an NR system is used as an example for description, and a specific type of the core network device is not limited.

Optionally, obtaining may be understood as acquiring from configuration, receiving, obtaining through receiving upon a request, obtaining through self-learning, obtaining through deduction based on non-received information, or obtaining through processing received information, which may be determined according to actual needs. This is not limited in some embodiments of this application. For example, when specific capability indication information sent by a device is not received, it can be deduced that the device does not support such capability.

Optionally, transmitting may include broadcasting, broadcasting through a system message, or returning a response after receiving the request.

In an optional embodiment of this application, the communication device may include at least one of the following: a communication network element (also referred to as a network-side device) and a terminal.

In an embodiment of this application, the communication network element may include at least one of the following: a core network network element and a radio access network network element.

In some embodiments of this application, the core network element (CN network element) may include but is not limited to at least one of the following: a core network device, a core network node, a core network function, a core-network network unit, a mobility management entity (Mobility Management Entity, MME), an access mobility management function (Access Management Function, AMF), a session management function (Session Management Function, SMF), a user plane function (User Plane Function, UPF), a serving gateway (serving GW, SGW), a PDN gateway (PDN Gate Way, PDN gateway), a policy control function (Policy Control Function, PCF), a policy and charging rules function unit (Policy and Charging Rules Function, PCRF), a serving GPRS support node (Serving GPRS Support Node, SGSN), a gateway GPRS support node (Gateway GPRS Support Node, GGSN), or an application function (Application Function).

In the embodiments of this application, the RAN network element may include but is not limited to at least one of the following: a radio access network device, a radio access network node, a radio access network function, a radio access network network element, a 3GPP radio access network, a non-3GPP radio access network, a centralized unit (Centralized Unit, CU), a distributed unit (Distributed Unit, DU), a base station, an evolved NodeB (evolved Node B, eNB), a 5G NodeB (gNB), a radio network controller (Radio Network Controller, RNC), a NodeB (NodeB), a non-3GPP interworking function (Non-3GPP InterWorking Function, N3IWF), an access controller (Access Controller, AC) node, an access point (Access Point, AP) device, a wireless local area network (Wireless Local Area Network, WLAN) node, or an N3IWF.

A base station may be a base transceiver station (BTS, Base Transceiver Station) in GSM or CDMA, or may be a NodeB (NodeB) in WCDMA, or may be an evolved NodeB (eNB or e-Node B, evolutional Node B) in LTE or a 5G NodeB (gNB), which is not limited in the embodiments of this application.

In an optional embodiment of this application, the UE may include at least one of the following: a terminal device, a terminal device and a card, and a card.

In an optional embodiment of this application, the card may include at least one of the following: SIM card, USIM card, and eSIM.

In an optional embodiment of this application, the terminal may include a relay supporting terminal functions and/or a terminal supporting relay functions. The terminal may also be referred to as a terminal device or user equipment (User Equipment, UE). The terminal may be a terminal-side device such as a mobile phone, a tablet computer (Tablet Personal Computer), a laptop computer (Laptop Computer), a personal digital assistant (Personal Digital Assistant, PDA), a mobile Internet device (Mobile Internet Device, MID), a wearable device (Wearable Device), or an in-vehicle device. It should be noted that a specific type of the terminal is not limited in the embodiments of this application.

It should be noted that the implementation of the following embodiments is applicable to various embodiments of this application.

In an optional embodiment of this application, the service includes data of the service, where the data of the service is also referred to as at least one of the following: service data, and data flow of the service (such as service data flow or traffic).

In an optional embodiment of this application, the service data flow is an abbreviation of the data flow of the service.

In an optional embodiment of this application, description information of the service and the description information of the data flow of the service are equivalent.

In an optional embodiment of this application, the description information of the service or the description information of the data flow of the service includes at least one of the following: service type information, a fully qualified domain name (Fully Qualified Domain Name, FQDN), a source Internet protocol (Internet Protocol, IP) address, a target IP address, a source port, a target end, a protocol number, a source media access control (Media Access Control, MAC) address, a target MAC address, a service application (Application) identifier, an operating system (operating system, OS) identifier, a packet detection rule (packet detection rule, PDR), and a data network name (Data Network Name, DNN).

In an optional embodiment of this application, the data direction includes at least one of the following: uplink and downlink.

In an optional embodiment of this application, the QoS requirement may also be referred to as a QoS rule (such as a QoS rule).

In an optional embodiment of this application, the QoS identifier is used to map values of a group of QoS parameters (such as a packet delay budget (Packet Delay Budget), a bit error rate (such as a Packet Error Rate), a maximum data burst capacity (Maximum Data Burst), an averaging window (Averaging window), or a transmission rate).

In an implementation, the QoS parameters include at least one of the following: a delay budget, a bit error rate, a maximum data burst capacity, an averaging window, a transmission rate, and so on.

In an optional embodiment of this application, the first QoS identifier may be a value used for mapping a group of QoS parameters. In an implementation, the mapped QoS parameters (the delay budget, bit error rate, maximum data burst capacity, and/or averaging window) are not distinguished between directions, that is, uplink values and downlink values of the QoS parameters are the same. In another implementation, the mapped QoS parameters (the delay budget, bit error rate, maximum data burst capacity, and/or averaging window) are distinguished between directions, such as being distinguished between an uplink delay budget and/or a downlink delay budget, an uplink error rate and/or a downlink error rate, an uplink maximum data burst capacity and/or a downlink maximum data burst capacity, and an uplink averaging window and/or a downlink averaging window. Values of the uplink QoS parameter and the downlink QoS parameter may be different.

In an implementation, the QoS identifier includes a 5G QoS identifier (5G QoS Identifier, 5QI), and in an optional embodiment of this application, the first QoS identifier may be a 5QI. The 5QI is used for mapping values of a group of QoS parameters.

In an optional embodiment of this application, "uplink value of QoS parameter" and "value of uplink QoS parameter" have the same meaning and can be used interchangeably. For example, an uplink value of a delay budget and a value of an uplink delay budget. Similarly, "downlink value of QoS parameter" and "value of downlink QoS parameter" have the same meaning and can be used interchangeably.

In an optional embodiment of this application, the delay guarantee means that the delay overhead does not exceed the delay budget or delay requirement. The round-trip delay guarantee includes at least one of the following: the round-trip delay overhead does not exceed the round-trip delay budget or round-trip delay requirement.

In an optional embodiment of this application, a sum of the uplink delay requirement and the downlink delay requirement for the service does not exceed at least one of the following: the round-trip delay requirement for the service, and a value twice the first delay requirement for the service.

In an optional embodiment of this application, the delay requirement is that: the delay overhead does not exceed the delay requirement. Therefore, the delay requirement is also referred to as a delay budget, such as a maximum delay budget and a minimum delay budget.

In an optional embodiment of this application, round-trip represents round trip, which may be also referred to as a loop.

The round-trip delay includes at least one of the following: an uplink delay and a downlink delay.

In an implementation, the round-trip delay requirement includes a sum of the uplink delay and the downlink delay.
(1) The uplink delay includes a time required for uplink data of a service to pass from a first end (such as a terminal or a first terminal) to a second end (such as an anchor gateway or a second terminal).
   Optionally, the uplink delay further includes at least one of the following: a residence time of the uplink data of the service at the first end (such as the terminal or the first terminal) and a residence time of the uplink data of the service at the second end (such as the anchor gateway or the second terminal).
(2) The downlink delay includes a time required for downlink data of a service to pass from a second end (such as an anchor gateway or a second terminal) to a first end (such as a terminal or a first terminal).
   Optionally, the downlink delay further includes at least one of the following: a residence time of the downlink data of the service at the first end (such as the terminal or the first terminal) and a residence time of the downlink data of the service at the anchor gateway.
(3) first delay includes a time required for data of a service to pass from a first end (such as a terminal or a first terminal) to a second end (such as an anchor gateway or a second terminal). The first delay can represent both the uplink delay and the downlink delay; in this case, the uplink delay and the downlink delay have a same value. Correspondingly, a first delay requirement may represent a first delay budget, such as a delay budget that is not exceeded by a first delay overhead.

In an implementation, the first delay further includes at least one of the following: a residence time of the data of the service at a first end (such as a terminal or a first terminal) and a residence time of the data of the service at a second end (such as an anchor gateway or a second terminal).

In another implementation, the first delay further includes at least one of the following: a residence time of uplink data of the service at the first end, a residence time of the uplink data of the service at the second end, a residence time of downlink data of the service at the first end and a residence time of the downlink data of the service at the second end.

The uplink data is data sent from the first end to the second end.

The downlink data refers to data sent from the second end to the first end.

In an optional embodiment of this application, the first delay requirement is a delay requirement of a first delay.

In an optional embodiment of this application, the first delay budget is a delay budget of a first delay.

The anchor gateway is a gateway (such as a UPF) connected to a data network (Data Network, DN) and a gateway terminating an N6 interface, and the N6 interface is an interface between the anchor gateway and the data network. N6 may alternatively be called by other names.

In an embodiment of this application, description information of the data channel includes information for identifying the data channel, including at least one of the following: an identifier of a terminal to which the channel belongs, and an identifier of the channel. In a case that the data channel is a QoS flow, the description information of the data channel may be at least one of the following: a QoS flow identifier and a 5QI.

In an optional embodiment of this application, the identification information of the channel may be a quality of service QoS flow identifier (QoS Flow Identifier, QFI).

In an optional embodiment of this application, a data channel may include but is not limited to at least one of the following: a PDU session, a PDN connection, a QoS flow, a bearer, and an Internet protocol security (Internet Protocol Security, IPsec) channel, where the bearer may be an evolved radio access bearer (Evolved Radio Access Bearer, E-RAB), a radio access bearer (Evolved Radio Access Bearer, RAB), a data radio bearer (Data Radio Bearer, DRB), a signaling radio bearer (signalling radio bearers, SRB), and the like.

In an embodiment of this application, the wireless communications network (such as a mobile cellular communication network) may be at least one of the following: a public network, a non-public network; or a first network may be a non-public network.

In an embodiment of this application, the non-public network is an abbreviation of the non-public network. The non-public network may be referred to as at least one of the following: a non-public communications network. The non-public network may include at least one of the following deployment manners: a physical non-public network, a virtual non-public network, and a non-public network implemented on a public network. In an implementation, the non-public network is a closed access group (Closed Access Group, CAG). One CAG may include a group of terminals.

In an embodiment of this application, the non-public network may include or be referred to as a private network. The private network may be referred to as at least one of the following: a private communications network, a private network, a local area network (LAN), a private virtual network (PVN), an isolated communications network, a dedicated communications network, or other names. It should be noted that the naming manner is not specifically limited in the embodiments of this application.

In an embodiment of this application, the public network is an abbreviation of the public network. The public network may be referred to as at least one of the following: a public communications network or other names. It should be noted that the naming manner is not specifically limited in the embodiments of this application.

In an embodiment of this application, a data packet size may be referred to as a data packet length.

In an embodiment of this application, a data packet may be referred to as a data frame.

In an optional embodiment of this application, the communication device may include at least one of the following: a communication network element and a terminal.

The following describes the QoS control method in the embodiments of this application.

Referring to FIG. 2, an embodiment of this application provides a QoS control method, applied to a first communication device. The first communication device includes but is not limited to a CN network element (such as a PCF or an SMF). In a case that the first communication device is a CN network element, it may be referred to as a first CN network element, and the method includes the following steps.

Step 201: The first communication device obtains first information, where the first information includes at least one of the following: a round-trip delay requirement for a service, an uplink delay requirement for a service, a downlink delay requirement for a service, a first delay requirement for a service, and first indication information of a service.

Step 202: The first communication device performs a first operation according to the first information, where the first operation includes at least one of the following:
mapping a first channel for a data flow of the service, where the first channel is usable for transmitting uplink data and/or downlink data of the service;
determining QoS requirement related information of the first channel;
determining first related information of a QoS requirement for the service data flow;
mapping a second channel and/or mapping a third channel for the data flow of the service, where the second channel is used for transmitting uplink data of the service and the third channel is used for transmitting downlink data of the service;
determining QoS requirement related information of the second channel and/or determining QoS requirement related information of the third channel;
determining second related information of a QoS requirement for the service data flow, and/or determining third related information of a QoS requirement for the service data flow;
determining a delay monitoring requirement, including at least one of the following: determining a delay monitoring requirement of the first channel, determining a delay monitoring requirement of the second channel, determining a delay monitoring requirement of the third channel, and determining a delay monitoring requirement of the data flow of the service;
determining an uplink delay requirement for the service and a downlink delay requirement for the service according to a round-trip delay requirement for the service, where a sum of the uplink delay requirement and the downlink delay requirement for the service does not exceed the round-trip delay requirement for the service;
using a value of half of the round-trip delay requirement for the service as the first delay requirement for the service;
performing mapping of a first QoS identifier based on the value of half of the round-trip delay requirement for the service;
using a value twice the first delay requirement for the service as the round-trip delay requirement for the service;
determining first indication information of the service; and
sending second information, where the second information includes at least one of the following: the QoS requirement related information of the first channel, the first related information of the QoS requirement for the service data flow, the QoS requirement related information of the second channel, the second related information of the QoS requirement for the service data flow, the QoS requirement related information of the third channel, the third related information of the QoS requirement for the service data flow, a delay monitoring requirement, and a related requirement for the service; where
the related requirement for the service includes at least one of the following: description information of the service, the round-trip delay requirement for the service, the uplink delay requirement for the service, the downlink delay requirement for the service, the first delay requirement for the service, and the first indication information of the service.

In this way, the first communication device obtains the first information that includes at least one of the round-trip delay requirement for the service, the uplink delay requirement for the service, the downlink delay requirement for the service, the first delay requirement for the service, and the first indication information of the service, and performs at least one of the first operation according to the first information, so as to achieve the purpose of round-trip delay guarantee.

In an implementation, a first channel is mapped for a data flow of the service, or QoS requirement related information of the first channel is determined.

In another implementation, a second channel and a third channel are mapped for the data flow of the service, or QoS requirement related information of the second channel and QoS requirement related information of the third channel are determined.

In an implementation, the second information may be carried in a policy and charging control (Policy and Charging Control, PCC) rule, for sending.

The round-trip delay requirement for the service in the second information may be the round-trip delay requirement for the service in the first information or a round-trip delay requirement for the service determined by the first communication device.

The first delay requirement for the service in the second information may be the first delay requirement in the first information or a first delay requirement determined by the first communication device.

The first indication information of the service in the second information may be the first indication information in the first information or first indication information determined by the first communication device.

Optionally, the first communication device is a PCF, an SMF, a gateway (such as a UPF), or a RAN.

Optionally, the first information is sent by a source device A (such as a second communication device), and the source device A includes at least one of the following: an AF, and an NEF.

Optionally, the first communication device sends the second information (such as the first QoS requirement) to a target device A (such as a third communication device), where the second information may enable the target device A to determine a QoS configuration (such as a first QoS configuration) according to the QoS requirement (such as the first QoS requirement) in the second information, determine a QoS monitoring configuration based on a QoS monitoring request, and/or map data to a channel. The target device includes at least one of the following: an SMF, a gateway (such as a UPF), an RAN, and a terminal. For example, in a case that the first communication device is a PCF, the target device A may be an SMF. For example, if the first communication device is an SMF, the target device A may be at least one of the following: a gateway (UPF), a RAN, and a terminal.

In an implementation, sending the second information to the terminal enables the terminal to map the data flow of the service to a data channel according to the second information.

In an optional embodiment of this application, the QoS requirement related information of the first channel includes at least one of the following: identification information of the first channel, a first QoS requirement, and a related requirement for the service.

In an implementation, the first QoS requirement in the QoS requirement related information of the first channel is a first QoS requirement for the first channel. Values of first QoS requirements for different first channels may be different.

In an implementation, the service in the QoS requirement related information of the first channel is a service of a data flow carried by the first channel. Therefore, the related requirement for the service may alternatively be referred to as a related requirement for the data flow of the service.

In an optional embodiment of this application, the first related information of the QoS requirement for the service data flow includes at least one of the following: description information of the data flow of the service, the first QoS requirement, a second QoS requirement, a third QoS requirement, and the related requirement for the service.

In an implementation, the N-th QoS requirement in the first related information of the QoS requirement for the service data flow indicates the N-th QoS requirement for the data flow of the service. A value of the N-th QoS requirement for data flows of different services may be different. A value of N is at least one of the following: one, two, and three.
(1) in an implementation, the first related information of the QoS requirement for the service data flow includes at least one of the following: description information of the data flow of the service and the first QoS requirement;
(2) in another implementation, the first related information of the QoS requirement for the service data flow includes at least one of the following: description information of the data flow of the service, a second QoS requirement, a third QoS requirement, and the related requirement for the service; and
(3) in another implementation, the first related information of the QoS requirement for the service data flow includes at least one of the following: description information of the data flow of the service and the related requirement for the service;
   and/or
   the QoS requirement related information of the second channel includes at least one of the following: identification information of the second channel, a data direction in the channel, fourth indication information, a second QoS requirement, a related requirement for the service, and identification information of an associated third channel; where the fourth indication information is used for indicating that the channel is used only for transmitting uplink data.

In an implementation, the data direction in the channel is used to indicate that the channel is used only for transmitting data in the data direction.

In an implementation, the second QoS requirement in the QoS requirement related information of the second channel is a second QoS requirement for the second channel. Values of second QoS requirements for different second channels may be different.

In an implementation, the service in the QoS requirement related information of the second channel is a service of a data flow carried by the second channel; and therefore, the related requirement for the service may alternatively be referred to as a related requirement for the data flow of the service;
and/or
the second related information of the QoS requirement for the service data flow includes at least one of the following: the description information of the data flow of the service, the data direction of the service, the second QoS requirement, and the related requirement for the service;
   and/or
the QoS requirement related information of the third channel includes at least one of the following: identification information of the third channel, a data direction in the channel, fifth indication information, a third QoS requirement, a related requirement for the service, and identification information of an associated second channel; where the fifth indication information is used for indicating that the channel is used only for transmitting downlink data.

In an implementation, the third QoS requirement in the QoS requirement related information of the third channel is a third QoS requirement for the third channel. Values of third QoS requirements for different third channels may be different.

In an implementation, the service in the QoS requirement related information of the third channel is a service of a data flow carried by the third channel; and therefore, the related requirement for the service may alternatively be referred to as a related requirement for the data flow of the service;
and/or
the third related information of the QoS requirement for the service data flow includes at least one of the following: the description information of the data flow of the service, the data direction of the service, the third QoS requirement, and the related requirement for the service.

In an implementation, the data direction includes at least one of the following: uplink and downlink.

In an implementation, a data direction in the second related information of the QoS requirement for the service data flow is uplink. In an implementation, a data direction in the third related information of the QoS requirement for the service data flow is downlink.

In an optional embodiment of this application, the first QoS requirement includes at least one of the following:
a first QoS identifier;
a first delay budget;
an uplink QoS requirement and a downlink QoS requirement;
a round-trip QoS requirement; and
second indication information;
where
the second indication information is used to indicate at least one of the following:
   a round-trip delay overhead of a first object does not exceed twice the first delay requirement;
   the round-trip delay overhead of the first object does not exceed the round-trip delay requirement for the service;
   the first object requires round-trip delay guarantee;
   an uplink delay overhead of the first object is allowed to exceed an uplink delay requirement of the first object or a first delay requirement of the first object;
   a downlink delay overhead of the first object is allowed to exceed a downlink delay requirement of the first object or the first delay requirement of the first object;
   a sum of the uplink delay overhead of the first object and the downlink delay overhead of the first object does not exceed a round-trip delay requirement of the first object; and
   the sum of the uplink delay overhead of the first object and the downlink delay overhead of the first object does not exceed a value twice the first delay requirement of the first object; where
   the first object includes at least one of the following: the first channel and the data flow of the service.

In an optional embodiment of this application, the first delay requirement includes a time budget required for data to pass between a terminal and an anchor gateway;
and/or
the first indication information of the service is used to indicate at least one of the following:
a round-trip delay overhead of the service does not exceed twice the first delay requirement;
the round-trip delay overhead of the service does not exceed the round-trip delay requirement for the service;
the service requires round-trip delay guarantee;
the uplink delay requirement for the service is different from the downlink delay requirement;
an uplink delay overhead of the service is allowed to exceed the uplink delay requirement for the service or the first delay requirement for the service;
a downlink delay overhead of the service is allowed to exceed the downlink delay requirement or the first delay requirement for the service;
a sum of the uplink delay overhead and the downlink delay overhead of the service does not exceed the round-trip delay requirement for the service; and
the sum of the uplink delay overhead and the downlink delay overhead of the service does not exceed a value twice the first delay requirement for the service.

In an optional embodiment of this application, the identification information of the first channel includes at least one of the following: a channel identifier of the first channel, a first QoS identifier of the first channel, an uplink QoS identifier of the first channel, and a downlink QoS identifier of the first channel.

In an optional embodiment of this application, the first QoS identifier is able to be mapped to at least one of the following: uplink values and/or downlink values of a group of QoS parameters, values of a group of uplink QoS parameters, downlink values of a group of downlink QoS parameters, and values of a group of QoS parameters.

In an implementation, an uplink value and a downlink value of a same QoS parameter are the same or different.

In an implementation, in a case that the first QoS identifier is able to be mapped to values of a group of QoS parameters, it means that the uplink value and downlink value of the QoS parameter are the same.

In an implementation, the QoS parameter includes a delay budget, such as a first delay budget.

In an implementation, the first channel is identified by a channel identifier (such as a QFI identifier) of the first channel.

In another implementation, the first channel is identified by a QoS identifier of the first channel, and the QoS identifier is used to identify an uplink QoS parameter and a downlink QoS parameter. In one case, the uplink QoS parameter and the downlink QoS parameter of the first channel have a same value, so the uplink QoS identifier and the downlink QoS identifier have a same value, and the first channel is identified by any one of the uplink QoS identifier and the downlink QoS identifier. In another case, the uplink QoS parameter and downlink QoS parameter of the first channel may have different values, so one QoS identifier used for identifying the first channel is mapped to the uplink QoS parameter and downlink QoS parameter, and the uplink QoS parameter and downlink QoS parameter may have different values.

In another implementation, the first channel uses an uplink QoS identifier of the first channel and a downlink QoS identifier of the first channel. It is not difficult to understand that the uplink QoS identifier and the downlink QoS identifier have different values in this case.

In an optional embodiment of this application, the uplink QoS requirement includes at least one of the following: an uplink QoS identifier, and an uplink delay budget;
and/or
the downlink QoS requirement includes at least one of the following: a downlink QoS identifier and a downlink delay budget.

For the uplink data of the service:
In an implementation, a priority of the uplink delay budget is higher than that of an uplink delay budget mapped by the uplink QoS identifier. In a case that the uplink QoS requirement includes (1) the uplink QoS identifier and (2) the uplink delay budget, a value of the uplink delay budget is used as a delay budget of the uplink data.

In an implementation, a priority of the uplink delay budget is higher than that of an uplink delay budget or a delay budget mapped by the first QoS identifier. In a case that the first QoS requirement includes (1) the first QoS identifier and (2) the uplink QoS requirement, and the uplink QoS requirement includes the uplink delay budget, a value of the uplink delay budget is used as a delay budget of the uplink data.

In an implementation, a priority of the uplink QoS identifier is higher than that of the first QoS identifier. In a case that the first QoS requirement includes (1) the first QoS identifier and (2) the uplink QoS requirement, and the uplink QoS requirement includes the uplink QoS identifier, a value of the uplink QoS identifier is used as a QoS parameter requirement of the uplink data.

Similarly, for the downlink data of the service:
In an implementation, a priority of the downlink delay budget is higher than that of a downlink delay budget mapped by the downlink QoS identifier. In a case that the downlink QoS requirement includes (1) the downlink QoS identifier and (2) the downlink delay budget, a value of the downlink delay budget is used as a delay budget of the downlink data.

In an implementation, a priority of the downlink delay budget is higher than that of a downlink delay budget or a delay budget mapped by the first QoS identifier. In a case that the first QoS requirement includes (1) the first QoS identifier and (2) the downlink QoS requirement, and the downlink QoS requirement includes the downlink delay budget, a value of a QoS parameter mapped by the downlink delay budget is used as a delay budget of the downlink data.

In an implementation, a priority of the downlink QoS identifier is higher than that of the first QoS identifier. In a case that the first QoS requirement includes (1) the first QoS identifier and (2) the downlink QoS requirement, and the downlink QoS requirement includes the downlink QoS identifier, a value of a QoS parameter mapped by the downlink QoS identifier is used as a QoS parameter requirement of the downlink data.

In an optional embodiment of this application, the round-trip QoS requirement includes:
a round trip QoS identifier, a round-trip delay budget, and a round trip error rate.

In an optional embodiment of this application, the performing at least one of the following: mapping a first channel for a data flow of the service, determining QoS requirement related information of the first channel, and determining first related information of a QoS requirement for the service data flow includes: in a case that a first condition is met, performing at least one of the following: mapping the first channel for the data flow of the service, determining the QoS requirement related information of the first channel, and determining the first related information of the QoS requirement for the service data flow; where
the first condition includes at least one of the following:
the service requires round-trip delay guarantee;
it is determined that the uplink delay requirement for the service is the same as the downlink delay requirement for the service;
it is determined that an uplink value of a QoS parameter of the service is the same as a value of a downlink QoS parameter;
it is determined that a QoS identifier mapped for uplink data of the service is the same as a QoS identifier mapped for downlink data of the service;
it is determined to use a value of half of the round-trip delay requirement for the service as the first delay requirement for the service or the first channel; and
it is determined to perform mapping of a first QoS identifier based on the value of half of the round-trip delay requirement for the service.

In an optional embodiment of this application, the performing at least one of the following: mapping a second channel and/or a third channel for the data flow of the service, determining QoS requirement related information of the second channel and/or determining QoS requirement related information of the third channel, and determining second related information of a QoS requirement for the service data flow and/or determining third related information of a QoS requirement for the service data flow includes:
in a case that a second condition is met, performing at least one of the following: mapping the second channel and/or the third channel for the data flow of the service, determining the QoS requirement related information of the second channel and/or the QoS requirement related information of the third channel, and determining the second related information of the QoS requirement for the service data flow and/or determining the third related information of the QoS requirement for the service data flow; where
the second condition includes at least one of the following:
   the service requires round-trip delay guarantee;
   it is determined that the uplink delay requirement for the service is different from the downlink delay requirement for the service;
   it is determined that an uplink value of a QoS parameter of the service is different from a value of a downlink QoS parameter; and
   it is determined that a QoS identifier mapped for uplink data of the service is different from a QoS identifier mapped for downlink data of the service.

In an optional embodiment of this application, the operation of determining the first QoS requirement includes at least one of the following:
performing at least one of the following according to the round-trip delay requirement for the service: splitting the round-trip delay requirement for the service to map to an uplink requirement and a downlink requirement in the first QoS requirement; splitting the round-trip delay requirement for the service into an uplink delay requirement for the service and a downlink delay requirement for the service; mapping the uplink delay requirement for the service obtained through splitting to the uplink requirement in the first QoS requirement; mapping the downlink delay requirement for the service obtained through splitting to the downlink requirement in the first QoS requirement; and splitting the round-trip delay requirement for the service to map to a first QoS identifier in the first QoS requirement;
performing at least one of the following based on a value of half of the round-trip delay requirement for the service: mapping the value of half of the round-trip delay requirement for the service to a first delay budget in the first QoS requirement, and mapping the value of half of the round-trip delay requirement for the service to the first QoS identifier in the first QoS requirement;
performing at least one of the following based on a value twice the first delay requirement for the service: using the value twice the first delay requirement for the service as a round-trip delay budget of the service, and mapping the value twice the first delay requirement for the service to a round-trip QoS requirement or the round-trip delay budget in the first QoS requirement;
performing at least one of the following according to the uplink delay requirement for the service: mapping the uplink delay requirement for the service to the uplink requirement in the first QoS requirement, and mapping the uplink delay requirement for the service to the first QoS identifier in the first QoS requirement; and
performing at least one of the following according to the downlink delay requirement for the service: mapping the downlink delay requirement for the service to the downlink requirement in the first QoS requirement, and mapping a downlink delay budget of the service to the first QoS identifier in the first QoS requirement;
   where
the uplink requirement includes at least one of the following: an uplink QoS requirement, an uplink delay budget, and an uplink QoS identifier; and
the downlink requirement includes at least one of the following: a downlink QoS requirement, a downlink delay budget, and a downlink QoS identifier.

In an optional embodiment of this application, a sum of an uplink delay budget in the first QoS requirement and a downlink delay budget in the first QoS requirement does not exceed the round-trip delay requirement for the service.

In an implementation, the uplink delay budget is at least one of the following:
an independent uplink delay budget parameter;
a value of an independent first delay budget parameter;
a value of an uplink delay budget mapped by the QoS identifier (such as the first QoS identifier and the uplink QoS identifier) in the first QoS requirement; and
a value of a first delay budget mapped by the QoS identifier (such as the first QoS identifier and the uplink QoS identifier) in the first QoS requirement.

The uplink delay budget is subject to a delay budget with the highest priority.

In an implementation, the downlink delay budget is at least one of the following:
an independent downlink delay budget parameter;
a value of an independent first delay budget parameter;
a value of a downlink delay budget mapped by the QoS identifier (such as the first QoS identifier and the downlink QoS identifier) in the first QoS requirement; and
a value of a first delay budget mapped by the QoS identifier (such as the first QoS identifier and the downlink QoS identifier) in the first QoS requirement.

The downlink delay budget is subject to a delay budget with the highest priority.

In an optional embodiment of this application, the operation of determining the second QoS requirement includes at least one of the following:
performing at least one of the following according to the round-trip delay requirement for the service: splitting the round-trip delay requirement for the service into an uplink delay requirement and a downlink delay requirement for the service, mapping a delay budget in the second QoS requirement according to the uplink delay requirement obtained through splitting, and mapping a QoS identifier in the second QoS requirement according to the uplink delay requirement obtained through splitting; and
performing at least one of the following according to the uplink delay requirement for the service: mapping the delay budget in the second QoS requirement according to the uplink delay requirement for the service, and mapping the QoS identifier in the second QoS requirement according to the uplink delay requirement for the service;
   and/or
the operation of determining the third QoS requirement includes at least one of the following:
   performing at least one of the following according to the round-trip delay requirement for the service: splitting the round-trip delay requirement for the service into an uplink delay requirement and a downlink delay requirement for the service, mapping a delay budget in the third QoS requirement according to the downlink delay requirement for the service obtained through splitting, and mapping a QoS identifier in the third QoS requirement according to the downlink delay requirement for the service obtained through splitting; and
   performing at least one of the following according to the downlink delay requirement for the service: mapping the delay budget in the third QoS requirement according to the downlink delay requirement for the service, and mapping the QoS identifier in the third QoS requirement according to the downlink delay requirement for the service.

In an optional embodiment of this application, a sum of the uplink delay requirement and the downlink delay requirement for the service does not exceed at least one of the following: the round-trip delay requirement for the service, and a value twice the first delay requirement for the service.

In an implementation, the sum of the uplink delay budget and the downlink delay budget of the first channel does not exceed the round-trip delay budget of the first channel.

In an implementation, the first information includes the uplink delay requirement for the service and the downlink delay requirement for the service, and the first QoS requirement being determined by the first communication device is specifically implemented as follows: mapping the uplink delay requirement (which may be referred to as the first uplink delay requirement) of the service to an uplink QoS requirement in the first QoS requirement, and mapping the downlink delay requirement (which may be referred to as the first downlink delay requirement) of the service to a downlink QoS requirement in the first QoS requirement.

In an implementation, the first information includes the round-trip delay requirement for the service, and the first QoS requirement being determined by the first communication device is specifically implemented as follows: performing splitting based on the round-trip delay requirement for the service to obtain an uplink delay requirement (which may be referred to as the second uplink delay requirement) and a downlink delay requirement (which may be referred to as the second downlink delay requirement) of the service, mapping the second uplink delay requirement to the uplink QoS requirement in the first QoS requirement, and mapping the second downlink delay requirement to the downlink QoS requirement in the first QoS requirement. The round-trip delay requirement for the service may be divided based on a pre-configured empirical value for round-trip delay division or a result of QoS monitoring. The empirical value for round-trip delay division may be 1/2.

In an implementation, the first communication device may use 1/2 of the round-trip delay requirement for the service as the uplink delay requirement for the service, so as to map the uplink delay requirement for the service to the uplink delay budget in the first QoS requirement. For example, in a case that no delay budget mapped by the first QoS identifier is equal to 1/2 of the round-trip delay requirement, the first QoS requirement includes the uplink delay budget and the first QoS identifier, a value of the uplink delay budget is equal to 1/2 of the round-trip delay requirement, and the downlink delay budget mapped by the first QoS identifier is not equal to 1/2 of the round-trip delay requirement. Because the priority of the uplink delay budget is higher than that of the first QoS identifier, the value of the uplink delay budget of the first QoS requirement is 1/2 of the round-trip delay requirement.

In an implementation, 1/2 of the round-trip delay requirement for the service is used as the downlink delay requirement for the service, so that the downlink delay requirement for the service is mapped to the first QoS identifier of the first QoS requirement. For example, in a case that no delay budget mapped by the first QoS identifier is equal to 1/2 of the round-trip delay requirement, the first QoS requirement includes the first QoS identifier, so a value of the uplink delay budget of the first QoS requirement is 1/2 of the round-trip delay requirement.

Therefore, for example, the first QoS requirement includes the first uplink delay budget and the first QoS identifier. In this case, the value of the first uplink delay budget is equal to 1/2 of the round-trip delay requirement, and the value of the downlink delay budget (which may be referred to as the second uplink delay budget) corresponding to the first QoS identifier is also equal to 1/2 of the round-trip delay requirement.

In an optional embodiment of this application, before the step of performing, by the first communication device, a first operation according to the first information, the method further includes:
obtaining, by the first communication device, third information, where the third information is used for indicating a result of delay monitoring; and
the performing, by the first communication device, a first operation according to the first information includes:
   performing, by the first communication device, the first operation according to the first information and the third information.

In an optional embodiment of this application, the result of the delay monitoring includes at least one of the following:
a result of uplink delay monitoring;
a result of downlink delay monitoring; and
a result of round-trip delay monitoring.

In an optional embodiment of this application, before the obtaining, by the first communication device, third information, the method further includes:
performing, by the first communication device, at least one of the following based on the first information:
   determining a delay monitoring requirement; and
   sending the delay monitoring requirement; where
   the delay monitoring requirement includes at least one of the following: a delay monitoring requirement for the first channel, a delay monitoring requirement for the second channel, a delay monitoring requirement for the third channel, and a delay monitoring requirement for the data flow of the service; and/or the delay monitoring requirement includes at least one of the following:
description information of a channel that requires delay monitoring;
description information of a service that requires delay monitoring;
an uplink delay monitoring requirement;
a downlink delay monitoring requirement; and
a round-trip delay monitoring requirement.

Optionally, the delay monitoring requirement may be used for monitoring a delay overhead in the channel. The uplink delay monitoring requirement is used for monitoring an uplink delay overhead. The downlink delay monitoring requirement is used for monitoring a downlink delay overhead.

Optionally, the first communication device sends the delay monitoring requirement of the channel to a target device B (such as the third communication device). The delay monitoring requirement may enable the target device B to determine a delay monitoring configuration and/or send the delay monitoring configuration according to the delay monitoring requirement of the channel. For example, in a case that the first communication device is a PCF, the target device B may be an SMF. For example, if the first communication device is an SMF, the target device B may be at least one of the following: a gateway (such as a UPF), a RAN, and a terminal.

The channel may include the first channel, the second channel and the third channel.

In this embodiment of this application, the first communication device can obtain the first information that includes at least one of the round-trip delay requirement for the service, the uplink delay requirement for the service, the downlink delay requirement for the service, the first delay requirement for the service, and the first indication information of the service, and performs the first operation according to the first information, so as to achieve the purpose of round-trip delay guarantee.

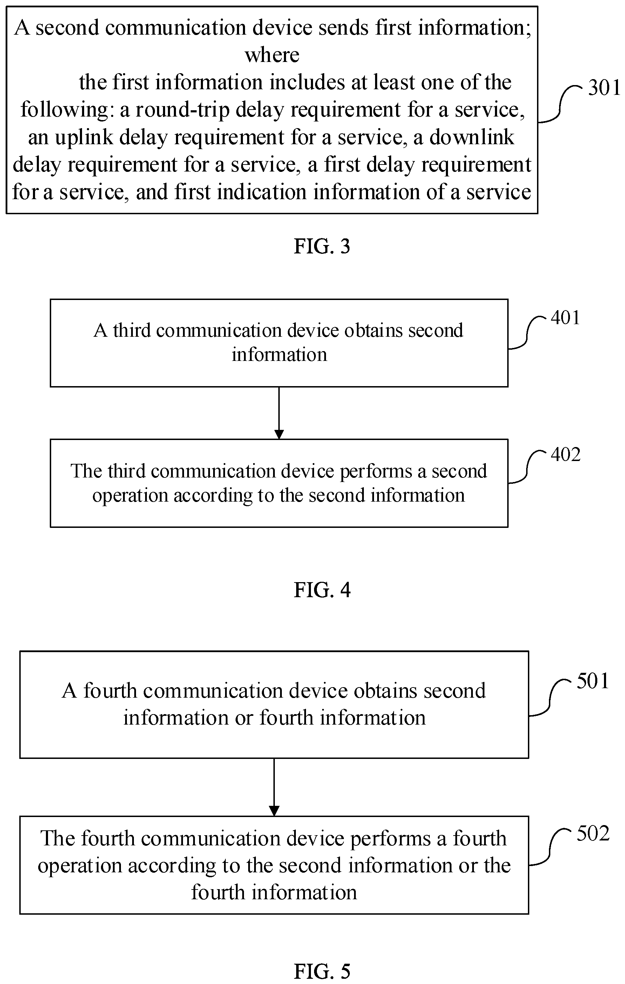

Referring to FIG. 3, an embodiment of this application provides a QoS control method, applied to a second communication device. The second communication device includes but is not limited to at least one of the following: a terminal, a CN network element (such as an AF or an NEF). In a case that the second communication device is a CN network element, it may be referred to as a second CN network element, and the method includes the following step.

Step 301: The second communication device sends first information.

The first information includes at least one of the following: a round-trip delay requirement for a service, an uplink delay requirement for a service, a downlink delay requirement for a service, a first delay requirement for a service, and first indication information of a service.

In an optional embodiment of this application, that the second communication device sends the first information includes:
sending, by the second communication device, the first information in a case that a third condition is satisfied; where
the third condition includes at least one of the following:
   the service requires round-trip delay guarantee;
   the uplink delay requirement for the service is different from the downlink delay requirement for the service; and
   a QoS guarantee requirement for the service is received or generated.

In an optional embodiment of this application, the round-trip delay requirement for the service is used for requesting to perform at least one of the following for the service according to the round-trip delay requirement for the service: round-trip delay guarantee, uplink delay guarantee, and downlink delay guarantee;
the uplink delay requirement for the service is used for requesting to guarantee an uplink delay of the service according to the uplink delay requirement for the service; and
the downlink delay requirement for the service is used for requesting to guarantee a downlink delay of the service according to the downlink delay requirement for the service;
   and/or
the first delay requirement for the service and/or the first indication information of the service is used to indicate at least one of the following:
   a round-trip delay overhead of the service does not exceed twice the first delay requirement;
   the round-trip delay overhead of the service does not exceed the round-trip delay requirement for the service;
   the service requires round-trip delay guarantee;
   the uplink delay requirement for the service is different from the downlink delay requirement;
   an uplink delay overhead of the service is allowed to exceed the uplink delay requirement for the service or the first delay requirement for the service;
   a downlink delay overhead of the service is allowed to exceed the downlink delay requirement or the first delay requirement for the service;
   a sum of the uplink delay overhead and the downlink delay overhead of the service does not exceed the round-trip delay requirement for the service; and
   the sum of the uplink delay overhead and the downlink delay overhead of the service does not exceed a value twice the first delay requirement for the service.

In an implementation, the second communication device sends the first information to a target device C (such as a first communication device). The second communication device includes at least one of an AF and an NEF. For example, in a case that the second communication device is an AF, the target device C is at least one of an NEF and a PCF. For example, in a case that the second communication device is a PCF, the target device C may be an SMF. For example, in a case that the second communication device is an NEF, the target device C may be a PCF.

In an implementation, the round-trip delay guarantee indicates that the round-trip delay overhead does not exceed the round-trip delay requirement or a value twice the first delay requirement.

In this embodiment of this application, the second communication device sends the first information that includes at least one of the round-trip delay requirement for the service, the uplink delay requirement for the service, the downlink delay requirement for the service, the first delay requirement for the service, and the first indication information of the service, so that a device receiving the first information can perform a first operation according to the first information, so as to achieve the purpose of round-trip delay guarantee.

Referring to FIG. 4, an embodiment of this application provides a QoS control method, applied to a third communication device. The third communication device includes but is not limited to a CN network element (such as an SMF). In a case that the third communication device is a CN network element, it may be referred to as a third CN network element, and the method includes the following steps.

Step 401: The third communication device obtains second information, where the second information includes at least one of the following: QoS requirement related information of a first channel, first related information of a QoS requirement for a service data flow, QoS requirement related information of a second channel, second related information of the QoS requirement for the service data flow, QoS requirement related information of a third channel, third related information of the QoS requirement for the service data flow, a delay monitoring requirement, and a related requirement for the service.

In an implementation, the second information may be carried in a PCC rule.

Step 402: The third communication device performs a second operation according to the second information, where the second operation includes at least one of the following:
mapping the first channel for the data flow of the service, where the first channel is usable for transmitting uplink data and/or downlink data of the service;
determining QoS configuration related information of the first channel;
mapping the second channel and/or the third channel for the data flow of the service, where the second channel is used for transmitting uplink data of the service and the third channel is used for transmitting downlink data of the service;
determining QoS configuration related information of the second channel;
determining QoS configuration related information of the third channel;
determining a delay monitoring configuration, including at least one of the following: determining a delay monitoring configuration of the first channel, determining a delay monitoring configuration of the second channel, determining a delay monitoring configuration of the third channel, and determining a delay monitoring configuration of the data flow of the service;
determining a QoS configuration of a second object; and
sending fourth information, where the fourth information includes at least one of the following: QoS configuration related information of the first channel, QoS configuration related information of the second channel, QoS configuration related information of the third channel, the delay monitoring configuration, and the QoS configuration of the second object; where
the QoS configuration of the second object includes at least one of the following: a round-trip delay configuration of the second object, a first delay configuration of the second object, and second indication information of the second object.

In an implementation, the second information is sent by a source device B (such as a first communication device), and the source device B includes at least one of the following: an AF, and an NEF.

In an optional embodiment of this application, the QoS configuration related information of the first channel includes at least one of the following: identification information of the first channel, a first QoS configuration, and a related requirement for the service;
and/or
the QoS configuration related information of the second channel includes at least one of the following: identification information of the second channel, a data direction in the channel, fourth indication information, a second QoS configuration, the QoS configuration of the second object, and identification information of an associated third channel; where the fourth indication information is used for indicating that the channel is used only for transmitting uplink data;
   and/or
the QoS configuration related information of the third channel includes at least one of the following: identification information of the third channel, a data direction in the channel, fifth indication information, a third QoS configuration, the QoS configuration of the second object, and identification information of an associated second channel; where the fifth indication information is used for indicating that the channel is used only for transmitting downlink data.

In an implementation, the QoS configuration related information of the first channel is determined according to the QoS requirement related information of the first channel, the first related information of the QoS requirement for the service data flow, and/or the related requirement for the service.

In an implementation, the QoS configuration related information of the second channel is determined according to the QoS requirement related information of the second channel, the second related information of the QoS requirement for the service data flow, and/or the related requirement for the service.

In an implementation, the QoS configuration related information of the third channel is determined according to the QoS requirement related information of the third channel, the third related information of the QoS requirement for the service data flow, and/or the related requirement for the service.

Optionally, the data direction includes at least one of the following: uplink and downlink.

In an implementation, a data direction in the second related information of the QoS requirement for the service data flow is uplink. In an implementation, a data direction in the third related information of the QoS requirement for the service data flow is downlink.

In an optional embodiment of this application, the operation of determining a QoS configuration of a second object includes at least one of the following:
mapping a first delay budget in the QoS configuration of the second object based on a value of half of a round-trip delay requirement for the service;
mapping a first QoS identifier in the QoS configuration of the second object based on the value of half of a round-trip delay requirement for the service;
mapping a round-trip delay budget in the QoS configuration of the second object based on a value twice a first delay requirement for the service;
mapping second indication information in the QoS configuration of the second object according to second indication information of the service;
mapping a first delay budget in the QoS configuration of the second object based on the first delay requirement for the service; and
using a sum of a delay budget in the second QoS configuration and a delay budget in the third QoS configuration as the round-trip delay budget in the QoS configuration of the second object; where
the second object includes at least one of the following: a channel group, and the data flow of the service.

In an implementation, the channel group consists of the second channel and the third channel.

In an optional embodiment of this application, the first QoS configuration includes at least one of the following:
a first QoS identifier;
a first delay budget;
an uplink QoS configuration and a downlink QoS configuration;
a round-trip QoS configuration; and
second indication information; where
the second indication information is used for indicating at least one of the following:
   a round-trip delay overhead of a first object does not exceed twice a first delay requirement;
   the round-trip delay overhead of the first object does not exceed the round-trip delay requirement for the service;
   the first object requires round-trip delay guarantee;
   an uplink delay overhead of the first object is allowed to exceed an uplink delay requirement of the first object or a first delay requirement of the first object;
   a downlink delay overhead of the first object is allowed to exceed a downlink delay requirement of the first object or the first delay requirement of the first object;
   a sum of the uplink delay overhead of the first object and the downlink delay overhead of the first object does not exceed a round-trip delay requirement of the first object; and
   the sum of the uplink delay overhead of the first object and the downlink delay overhead of the first object does not exceed a value twice the first delay requirement of the first object; where
   the first object includes at least one of the following: the first channel.

In an optional embodiment of this application, the uplink QoS configuration includes at least one of the following:
a downlink QoS identifier and an uplink delay budget;
   and/or
the downlink QoS configuration includes at least one of the following:
   a downlink QoS identifier and a downlink delay budget.

In an optional embodiment of this application, the QoS requirement related information of the first channel includes at least one of the following: identification information of the first channel, a first QoS requirement, and a related requirement for the service.
the first related information of the QoS requirement for the service data flow includes at least one of the following: description information of the data flow of the service, the first QoS requirement, a second QoS requirement, a third QoS requirement, and the related requirement for the service;
   and/or
the QoS requirement related information of the second channel includes at least one of the following: identification information of the second channel, a data direction in the channel, fourth indication information, a second QoS requirement, a related requirement for the service, and identification information of an associated third channel; where the fourth indication information is used for indicating that the channel is used only for transmitting uplink data;
   and/or
the second related information of the QoS requirement for the service data flow includes at least one of the following: the description information of the data flow of the service, the data direction of the service, the second QoS requirement, and the related requirement for the service;
   and/or
the QoS requirement related information of the third channel includes at least one of the following: identification information of the third channel, a data direction in the channel, fifth indication information, a third QoS requirement, a related requirement for the service, and identification information of the associated second channel; where the fifth indication information is used for indicating that the channel is used only for transmitting downlink data.
the third related information of the QoS requirement for the service data flow includes at least one of the following: the description information of the data flow of the service, the data direction of the service, the third QoS requirement, and the related requirement for the service.

In an optional embodiment of this application, the operation of determining the first QoS configuration includes at least one of the following:
determining the first QoS configuration according to the first QoS requirement;
performing at least one of the following according to the round-trip delay requirement for the service: splitting the round-trip delay requirement for the service to map to an uplink configuration and a downlink configuration in the first QoS configuration; splitting the round-trip delay requirement for the service into an uplink delay requirement for the service and a downlink delay requirement for the service; mapping the uplink delay requirement for the service obtained through splitting to the uplink configuration in the first QoS configuration; mapping the downlink delay requirement for the service obtained through splitting to the downlink configuration in the first QoS configuration; and splitting the round-trip delay requirement for the service to map to a first QoS identifier in the first QoS configuration;
performing at least one of the following based on a value of half of the round-trip delay requirement for the service: mapping the value of half of the round-trip delay requirement for the service to a first delay budget in the first QoS configuration, and mapping the value of half of the round-trip delay requirement for the service to the first QoS identifier in the first QoS configuration;
performing at least one of the following based on a value twice a first delay requirement for the service: using the value twice the first delay requirement for the service as a round-trip delay budget of the service, and mapping the value twice the first delay requirement for the service to a round-trip QoS configuration or the round-trip delay budget in the first QoS configuration;
performing at least one of the following according to the uplink delay requirement for the service: mapping the uplink delay requirement for the service to the uplink configuration in the first QoS configuration, and mapping the uplink delay requirement for the service to the first QoS identifier in the first QoS configuration; and
performing at least one of the following according to the downlink delay requirement for the service: mapping the downlink delay requirement for the service to the downlink configuration in the first QoS configuration, and mapping a downlink delay budget of the service to the first QoS identifier in the first QoS configuration;
   where
the uplink configuration includes at least one of the following: an uplink QoS configuration, an uplink delay budget, and an uplink QoS identifier; and
the downlink configuration includes at least one of the following: a downlink QoS configuration, a downlink delay budget, and a downlink QoS identifier.

In an implementation, the first QoS requirement is at least one of the following: the first QoS requirement in the QoS requirement related information of the first channel; and the first QoS requirement in first related information of the QoS requirement for the service data flow.

In an optional embodiment of this application, a sum of an uplink delay budget in the first QoS configuration and a downlink delay budget in the first QoS configuration does not exceed at least one of the following: the round-trip delay requirement for the service, and a value twice the first delay requirement for the service.

In an implementation, the uplink delay budget is a value of an uplink delay budget parameter or a delay budget value mapped by the uplink QoS identifier.

In another implementation, the downlink delay budget is a value of a downlink delay budget parameter or a delay budget value mapped by the downlink QoS identifier.

In an optional embodiment of this application, the operation of determining the second QoS configuration includes at least one of the following:
determining the second QoS configuration according to the second QoS requirement;
performing at least one of the following according to the round-trip delay requirement for the service: splitting the round-trip delay requirement for the service into an uplink delay requirement and a downlink delay requirement for the service, mapping a delay budget in the second QoS configuration according to the uplink delay requirement obtained through splitting, and mapping a QoS identifier in the second QoS configuration according to the uplink delay requirement obtained through splitting; and
performing at least one of the following according to the uplink delay requirement for the service: mapping the delay budget in the second QoS configuration according to the uplink delay requirement for the service, and mapping the QoS identifier in the second QoS configuration according to the uplink delay requirement for the service;
   and/or
the operation of determining the third QoS configuration includes at least one of the following:
   determining the third QoS configuration according to the third QoS requirement;
   performing at least one of the following according to the round-trip delay requirement for the service: splitting the round-trip delay requirement for the service into an uplink delay requirement and a downlink delay requirement for the service, mapping a delay budget in the third QoS configuration according to the downlink delay requirement for the service obtained through splitting, and mapping a QoS identifier in the third QoS configuration according to the downlink delay requirement for the service obtained through splitting; and
   performing at least one of the following according to the downlink delay requirement for the service: mapping the delay budget in the third QoS configuration according to the downlink delay requirement for the service, and mapping the QoS identifier in the third QoS configuration according to the downlink delay requirement for the service.

In an implementation, the second QoS requirement is at least one of the following: the second QoS requirement in the QoS requirement related information of the second channel; and the second QoS requirement in second related information of the QoS requirement for the service data flow.

In an implementation, the third QoS requirement is at least one of the following: the third QoS requirement in the QoS requirement related information of the third channel; and the third QoS requirement in third related information of the QoS requirement for the service data flow.

In an optional embodiment of this application, the method further includes:
determining, by the third communication device, a delay monitoring requirement, where the delay monitoring requirement includes at least one of the following:
   description information of a channel that requires delay monitoring, description information of a service that requires delay monitoring, an uplink delay monitoring requirement, a downlink delay monitoring requirement, and a round-trip delay monitoring requirement; and
   performing, by the third communication device, at least one of the following according to the delay monitoring requirement:
determining a delay monitoring configuration; and
sending the delay monitoring configuration; where
the delay monitoring configuration includes at least one of the following: a delay monitoring configuration of the first channel, a delay monitoring configuration of the second channel, a delay monitoring configuration of the third channel, and a delay monitoring configuration of the data flow of the service.

Optionally, the third communication device sends the fourth information to a target device D (such as a fourth communication device). The target device D may be at least one of the following: a gateway (such as a UPF), a RAN, and a terminal. The fourth information may enable the target device D to perform resource scheduling, delay guarantee, and/or mapping of data to a channel according to the fourth information.

In an implementation, the QoS configuration related information of the second channel is sent to a first end device (such as a terminal or a first terminal) according to the data direction in the channel in the QoS configuration related information of the second channel or the fourth indication information.

In an implementation, the QoS configuration related information of the third channel is sent to a second end device (such as a gateway or a second terminal) according to the data direction in the channel in the QoS configuration related information of the third channel or the fifth indication information.

In this embodiment of this application, the third communication device can obtain the second information that includes at least one of the following: QoS requirement related information of the first channel, the first related information of QoS requirement for the service data flow, the QoS requirement related information of the second channel, the second related information of the QoS requirement for the service data flow, the QoS requirement related information of the third channel, the third related information of the QoS requirement for the service data flow, the delay monitoring requirement, and the related requirement for the service; and perform the third operation according to the first information, so as to achieve the purpose of round-trip delay guarantee.

Referring to FIG. 5, an embodiment of this application provides a QoS control method, applied to a fourth communication device. The fourth communication device includes but is not limited to at least one of the following: a terminal, a CN network element (such as a gateway (UPF)), and a RAN network element. In a case that the fourth communication device is a CN network element, it may be referred to as a fourth CN network element. The method includes the following steps.

Step 501: The fourth communication device obtains second information or fourth information.

Step 502: The fourth communication device performs a fourth operation according to the second information or the fourth information, where the fourth operation includes at least one of the following:
a related operation of a first channel; and
a related operation of a second channel and/or a third channel.

The second information includes at least one of the following: QoS requirement related information of the first channel, first related information of a QoS requirement for a service data flow, QoS requirement related information of the second channel, second related information of the QoS requirement for the service data flow, QoS requirement related information of the third channel, third related information of the QoS requirement for the service data flow, a delay monitoring requirement, and a related requirement for the service; and
the fourth information includes at least one of the following: QoS configuration related information of the first channel, QoS configuration related information of the second channel, QoS configuration related information of the third channel, a delay monitoring configuration, and a QoS configuration of a second object; where
the related operation of the first channel includes at least one of the following:
   guaranteeing that a round-trip delay overhead of data of the first channel does not exceed twice a first delay budget or does not exceed a round-trip delay budget;
   in a case that an uplink delay overhead exceeds an uplink delay budget or the first delay budget, guaranteeing that a sum of an uplink delay overhead and a downlink delay overhead of the first channel does not exceed a round-trip delay budget of the first channel;
   in a case that the downlink delay overhead exceeds a downlink delay budget or the first delay budget, guaranteeing that the sum of the uplink delay overhead and the downlink delay overhead of the first channel does not exceed the round-trip delay budget of the first channel;
   guaranteeing an uplink delay overhead based on an uplink delay budget of the first channel, where the uplink delay budget is at least one of the following: an uplink delay configuration in a first QoS configuration, an uplink delay budget mapped by an uplink QoS identifier, an uplink delay budget mapped by a first QoS identifier, a value obtained through the round-trip delay budget minus a downlink delay average overhead, and a value obtained through twice the first delay budget minus the downlink delay average overhead;
   guaranteeing a downlink delay overhead based on a downlink delay budget of the first channel, where the downlink delay budget is at least one of the following: a downlink delay configuration in the first QoS configuration, an uplink delay budget mapped by a downlink QoS identifier, a downlink delay budget mapped by a first QoS identifier, a value obtained through the round-trip delay budget minus an uplink delay average overhead, and a value obtained through twice the first delay budget minus the uplink delay average overhead;
   performing resource allocation and data scheduling according to the first QoS configuration; and
   mapping the data flow of the service to a first data channel; where
   the related operation of the second channel and/or the third channel includes at least one of the following:
      guaranteeing that a sum of a delay overhead of the second channel and a delay overhead of the third channel does not exceed twice a first delay budget of the second object, or does not exceed a round-trip delay budget of the second object;
      in a case that an overhead of the second channel exceeds a delay budget of the second channel, guaranteeing that the sum of the delay overhead of the second channel and the delay overhead of the third channel does not exceed the round-trip delay budget of the second object;
      in a case that a delay overhead of the third channel exceeds a delay budget of the third channel, guaranteeing that a sum of the uplink delay overhead of the first channel and the delay overhead of the third channel does not exceed the round-trip delay budget of the second object;
      performing resource allocation and data scheduling according to the first QoS configuration;
      mapping uplink data of the service to a second data channel; and
      mapping downlink data of the service to a third data channel.

In an optional embodiment of this application, the first QoS configuration includes at least one of the following:
a first QoS identifier;
a first delay budget;
an uplink QoS configuration and a downlink QoS configuration;
a round-trip QoS configuration; and
second indication information; where
the second indication information is used for indicating at least one of the following:
   a round-trip delay overhead of a first object does not exceed twice a first delay requirement;
   the round-trip delay overhead of the first object does not exceed a round-trip delay requirement for the service;
   the first object requires round-trip delay guarantee;
   an uplink delay overhead of the first object is allowed to exceed an uplink delay requirement of the first object or a first delay requirement of the first object;
   a downlink delay overhead of the first object is allowed to exceed a downlink delay requirement of the first object or the first delay requirement of the first object;
   a sum of the uplink delay overhead of the first object and the downlink delay overhead of the first object does not exceed a round-trip delay requirement of the first object; and
   the sum of the uplink delay overhead of the first object and the downlink delay overhead of the first object does not exceed a value twice the first delay requirement of the first object; where
   the first object includes at least one of the following: the first channel.

In an optional embodiment of this application, the uplink QoS configuration includes at least one of the following:
a downlink QoS identifier and an uplink delay budget;
   and/or
the downlink QoS configuration includes at least one of the following:
   a downlink QoS identifier and a downlink delay budget.

In an implementation, in a case that the fourth communication device is a first end (a terminal or a first terminal), the related operation of the second channel and/or the third channel includes at least one of the following: mapping uplink data of the service to the second data channel and receiving downlink data of the service from the third data channel.

In an implementation, in a case that the fourth communication device is a second end (a gateway (such as a UPF) or a second terminal), the related operation of the second channel and/or the third channel includes at least one of the following: mapping downlink data of the service to the third data channel and receiving uplink data of the service from the second data channel.

In an optional embodiment of this application, the mapping the data flow of the service to the second data channel includes: mapping the data flow of the service to the third data channel in a case that a fifth condition is met; where
the fifth condition includes at least one of the following:
a value of a data direction in QoS related information of the second data channel is uplink;
the second data channel is used only for transmitting uplink data; and
a value of a data direction in QoS-related configuration information of the second data channel is uplink;
   and/or
the mapping the data flow of the service to the first data channel includes mapping the data flow of the service to the third data channel in a case that a sixth condition is met; where
the sixth condition includes at least one of the following:
   a value of a data direction in QoS related information of the third data channel is downlink;
   the third data channel is used only for transmitting downlink data; and
   a value of a data direction in QoS-related configuration information of the third data channel is downlink.

In an implementation, mapping the data flow of the service to the N-th data channel includes at least one of the following: sending data of the service through the N-th data channel, adding identification information of the N-th data channel to a packet header of the data of the service, and sending the data of the service to a device providing the N-th data channel. Herein, a value of N is at least one of the following: one, two, and three.

Optionally, the second information is sent by a source device C (such as a first communication device), and the source device C includes at least one of the following: an AF and an NEF.

Optionally, the fourth information is sent by a source device D (such as a third communication device), and the source device D includes at least one of the following: an SMF.

According to this embodiment of this application, after obtaining the second information or the fourth information, the fourth communication device performs the fourth operation according to the second information or the fourth information, so as to achieve the purpose of round-trip delay guarantee.

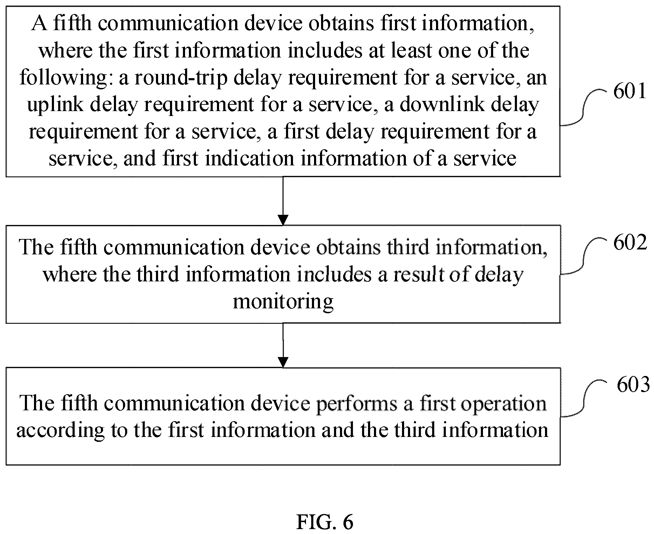

Referring to FIG. 6, an embodiment of this application provides a QoS control method, applied to a fifth communication device. The fifth communication device includes but is not limited to a CN network element (such as a PCF or an SMF). In a case that the fifth communication device is a CN network element, it may be referred to as a fifth CN network element.

The method includes the following steps.

Step 601: The fifth communication device obtains fifth information, where the fifth information includes a result of delay monitoring.

Step 602: The fifth communication device performs a fifth operation according to the fifth information, where the fifth operation includes at least one of the following:
generating or updating an uplink delay requirement and/or a downlink delay requirement for a service data flow;
generating or updating an uplink delay budget and/or a downlink delay budget of a first channel; and
generating or updating a delay budget of a second channel and/or a delay budget of a third channel;
   where
the first channel is usable for transmitting uplink data and/or downlink data of the service;
the second channel is used for transmitting the uplink data of the service; and
the third channel is used for transmitting the downlink data of the service.

In an optional embodiment of this application, the result of the delay monitoring includes at least one of the following:
a result of uplink delay monitoring;
a result of downlink delay monitoring; and
a result of round-trip delay monitoring.

In an optional embodiment of this application, the fifth information further includes a round-trip delay budget of a third object.

The third object includes at least one of the following: a service data flow, a channel group, and the first channel.

In an optional embodiment of this application, the performing, by the fifth communication device, a fifth operation according to the fifth information includes: performing the fifth operation according to the fifth information by the fifth communication device in a case that a fourth condition is met; where
the fourth condition includes at least one of the following:
a result of uplink delay monitoring exceeds at least one of the following: a current uplink delay requirement for the service data flow, an uplink delay budget of the first channel, and a delay budget of the second channel;
a result of downlink delay monitoring exceeds at least one of the following: a current downlink delay requirement for the service data flow, a current downlink delay requirement for the service data flow, a downlink delay budget of the first channel, and a delay budget of the third channel;
a result of round-trip delay monitoring does not exceed a round-trip delay requirement of a third object; and
a sum of the result of uplink delay monitoring and the result of downlink delay monitoring does not exceed the round-trip delay requirement of the third object.

In an optional embodiment of this application, before the obtaining, by the fifth communication device, third information, the method further includes:
performing, by the fifth communication device, at least one of the following based on first information:
determining a delay monitoring requirement; and
sending the delay monitoring requirement; where
the delay monitoring requirement includes at least one of the following: a delay monitoring requirement for the first channel, a delay monitoring requirement for the second channel, a delay monitoring requirement for the third channel, and a delay monitoring requirement for the data flow of the service; and/or the delay monitoring requirement includes at least one of the following:
   description information of a channel that requires delay monitoring;
   description information of a service that requires delay monitoring;
   an uplink delay monitoring requirement;
   a downlink delay monitoring requirement; and
   a round-trip delay monitoring requirement.

Optionally, the fifth information is sent by a source device E (such as a third communication device), and the source device E includes at least one of the following: an SMF, and a PCF.

According to this embodiment of this application, after obtaining the fifth information, the fifth communication device performs the fifth operation according to the fifth information, thereby achieving the purpose of round-trip delay guarantee.

The following describes the QoS control method in the embodiments of this application with reference to specific application scenarios.

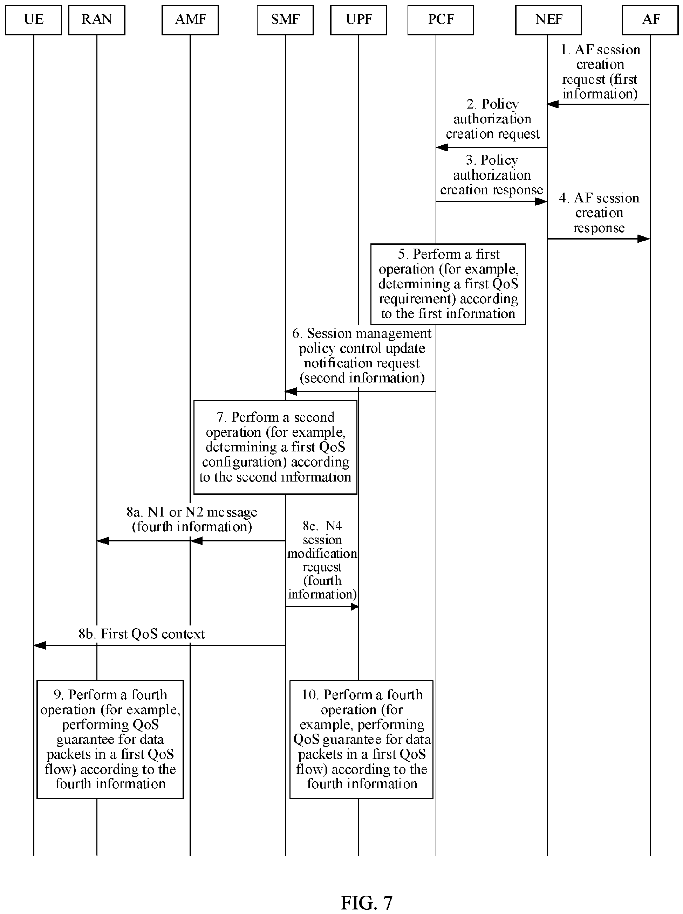

Application scenario 1 of the embodiments of this application mainly describes a process that a PCF directly determines a first QoS requirement based on a delay requirement for the service to implement QoS configuration, where the first communication device is the PCF, the second communication device is an AF, the third communication device is an SMF, and the fourth communication device is a RAN and a UPF. Referring to FIG. 7, the following steps are included:
Step 1: The AF sends first information (such as a round-trip delay requirement) to an NEF. The first information is carried by an AF session creation request.

The first information is as described in the embodiment of FIG. 2, which is not described herein.

Step 2: The NEF sends the first information (such as a round-trip delay requirement) to the PCF. The first information is carried by a policy authorization creation request.

Step 3: The PCF returns a policy authorization creation response to the NEF.

Step 4: The NEF returns an AF session creation response to the AF.

Step 5: The PCF determines according to the first information (such as the round-trip delay requirement) to perform a first operation (for example, determining a first QoS requirement). Herein, the first QoS requirement may be a QoS requirement of the first channel (a first QoS flow).

The first QOS requirement includes an uplink QoS requirement and a downlink QoS requirement. The uplink QoS requirement includes at least one of the following: uplink 5QI (first uplink 5QI) and uplink delay budget (first uplink delay budget). The downlink QoS requirement includes at least one of the following: downlink 5QI (first downlink 5QI) and downlink delay budget (first downlink delay budget).

The first QOS requirement may further include a round-trip QoS requirement. The round-trip QoS requirement includes a round-trip delay budget. A sum of the uplink delay budget corresponding to the uplink QoS requirement (an uplink delay budget mapped by the first uplink 5QI or the first uplink delay budget) and the downlink delay budget corresponding to the downlink QoS requirement (a downlink delay budget mapped by the first downlink 5QI or the first downlink delay budget) cannot exceed the round-trip delay budget.

In a case that the round-trip delay requirement includes an uplink delay requirement and a downlink delay requirement, the PCF can directly determine the first QoS requirement according to the round-trip delay requirement. For example, the uplink QoS requirement is determined according to the uplink delay requirement; and the downlink QoS requirement is determined according to the downlink delay requirement.

In a case that the round-trip delay requirement includes one round-trip delay requirement, the PCF can divide the round-trip delay requirement based on a pre-configured empirical value for round-trip delay division or a result of QoS monitoring, and then determine the uplink QoS requirement and the downlink QoS requirement. For example, in a gaming service, uplink data packets are relatively small and are often action packets of a user, and only sending the packets to a server as soon as possible can then avoid picture jitters, requiring a relatively small delay budget; however, downlink data packets are relatively large and are often background pictures and status packets of the game, therefore requiring a relatively large delay budget.

In an implementation, the first QoS requirement includes an uplink 5QI and a downlink 5QI. The uplink 5QI is a standard 5QI when the uplink delay requirement is able to be mapped to a standard 5QI. This also holds true for downlink.

In another implementation, the first QoS requirement has no uplink 5QI nor downlink 5QI. One 5QI, an uplink delay budget, and/or a downlink delay budget are present in the first QoS requirement. Values of the uplink delay budget and/or downlink delay budget are obtained according to a standard delay budget corresponding to the direction override 5QI.

In an implementation, one 5QI and an uplink delay budget are present in the first QoS requirement, so a value of an uplink delay budget used based on the first QoS requirement is the uplink delay budget, and a value of a downlink delay budget is a value of a delay budget corresponding to the 5QI.

In another implementation, one 5QI and a downlink delay budget are present in the first QoS requirement, so a value of a downlink delay budget used based on the first QoS requirement is the downlink delay budget, and a value of an uplink delay budget is a value of a delay budget corresponding to the 5QI.

Step 6: The PCF sends second information (such as the first QoS requirement) to the SMF (for example, being included in a PCC rule). The first QoS requirement is carried in a session management policy control update notification request. Certainly, the PCF can also directly send the first information to the SMF.

The second information is as described in the embodiment of FIG. 2, which is not described herein.

Step 7: The SMF performs a second operation (for example, determining a first QoS configuration) according to the second information (such as the first QoS requirement). The first QoS configuration is a QoS requirement for configuring a first QoS flow.

The first QoS configuration includes an uplink QoS configuration and a downlink QoS configuration. The uplink QoS configuration includes at least one of the following: uplink 5QI (second uplink 5QI) and uplink delay budget (third uplink delay budget). The downlink QoS configuration includes at least one of the following: downlink 5QI (second downlink 5QI) and downlink delay budget (third downlink delay budget).

The first QoS configuration may further include a round-trip QoS configuration. The round-trip QoS configuration includes a round-trip delay budget. A sum of the uplink delay budget corresponding to the uplink QoS configuration (an uplink delay budget mapped by the second uplink 5QI or the third uplink delay budget) and the downlink delay budget (a downlink delay budget mapped by the second downlink 5QI or the third downlink delay budget) cannot exceed the round-trip delay budget.

In an implementation, the first QoS configuration has an uplink 5QI and a downlink 5QI. The uplink 5QI is a standard 5QI when the uplink delay requirement is able to be mapped to a standard 5QI. This also holds true for downlink.

In another implementation, the first QoS configuration has no uplink 5QI nor downlink 5QI. One 5QI, an uplink delay budget, and/or a downlink delay budget are present in the first QoS configuration. Values of the uplink delay budget and/or downlink delay budget are obtained according to the standard delay budget corresponding to the direction override 5QI.

In an implementation, one 5QI and an uplink delay budget are present in the first QoS configuration, so a value of an uplink delay budget used based on the first QoS configuration is the uplink delay budget, and a downlink delay budget is a value of a delay budget corresponding to the 5QI.

In another implementation, one 5QI and a downlink delay budget are present in the first QoS configuration, so a value of a downlink delay budget used based on the first QoS configuration is the downlink delay budget, and an uplink delay budget is a value of a delay budget corresponding to the 5QI.

Certainly, if the PCF sends a round-trip delay requirement to the SMF, the SMF can also determine the first QoS configuration according to the round-trip delay requirement. For specific implementation, refer to the process of determining the first QoS configuration according to the first QoS requirement, which is not repeated herein.

### Step 8:

The SMF sends fourth information (such as the first QoS configuration) to the RAN through the AMF. The first QoS configuration is carried in an N1 or N2 message.

The SMF sends the fourth information (such as the first QoS configuration) to the UPF. The first QoS configuration is carried in an N4 session modification request, where the N4 session modification request is sent after a channel is established.

The SMF sends a first QoS context to the UE. The UE maps a data flow of a service to a first QoS flow based on the first QoS context.

The fourth information is as described in the embodiment of FIG. 4, which is not described herein.

Step 9: The RAN performs a fourth operation (for example, performing QoS guarantee for data packets in the first QoS flow) according to the fourth information (such as the first QoS configuration), so as to meet a requirement of the first QoS configuration.

Step 10: The UPF performs a fourth operation (for example, performing QoS guarantee for data packets in the first QoS flow) according to the fourth information (such as the first QoS configuration), so as to meet a requirement of the first QoS configuration.

Application scenario 2 in the embodiments of this application:

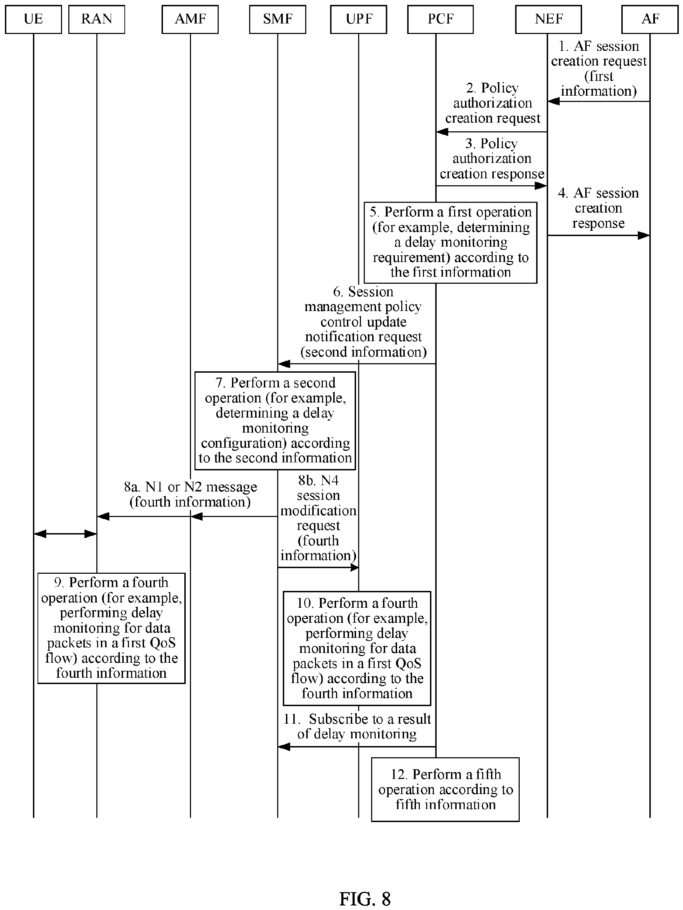

Application scenario 2 of the embodiments of this application mainly describes a process that a PCF adjusts a first QoS requirement based on a result of delay monitoring and a delay requirement, where the first communication device is the PCF, the second communication device is an AF, the third communication device is an SMF, and the fourth communication device is a RAN and a UPF. Referring to FIG. 8, the following steps are included:

Steps 1-4 are the same as steps 1-4 of application scenario 1 and are not repeated herein.

Step 5: The PCF performs a first operation (for example, determining a delay monitoring requirement) according to first information (such as the round-trip delay requirement). The delay monitoring requirement is used for monitoring a delay overhead in a first QoS flow.

The first information is as described in the embodiment of FIG. 2, which is not described herein.

The delay monitoring requirement includes an uplink delay monitoring requirement and a downlink delay monitoring requirement. The uplink delay monitoring requirement is used for monitoring an uplink delay overhead. The downlink delay monitoring requirement is used for monitoring a downlink delay overhead.

The delay monitoring requirement may further include a round-trip delay requirement.

During the monitoring process, reporting events can be monitored, and a sum of the uplink delay overhead and the downlink delay overhead exceeds the round-trip delay requirement.

Step 6: The PCF sends second information (such as the delay monitoring requirement) to the SMF (for example, being included in a PCC rule). The second information is carried in a session management policy control update notification request.

The second information is as described in the embodiment of FIG. 2, which is not described herein.

Step 7: The SMF performs a second operation (for example, determining a delay monitoring configuration) according to the second information (such as the delay monitoring requirement). The delay monitoring configuration is a QoS requirement for configuring a first QoS flow.

### Step 8:

The SMF sends fourth information (such as the delay monitoring configuration) to the RAN through the AMF. The fourth information is carried in an N1 or N2 message.

The SMF sends the fourth information (such as the delay monitoring configuration) to the UPF. The fourth information is carried in an N4 session modification request, where the N4 session modification request is sent after a channel is established.

The fourth information is as described in the embodiment of FIG. 4, which is not described herein.

Step 9: The RAN performs a fourth operation (for example, performing delay monitoring on data packets in the first QoS flow) according to the fourth information (such as the delay monitoring configuration), which is specifically as defined in 501 QoS monitoring (monitoring).

Step 10: The UPF performs a fourth operation (for example, performing delay monitoring on data packets in the first QoS flow) according to the fourth information (such as the delay monitoring configuration), which is specifically as defined in 501 QoS monitoring.

Step 11: The PCF subscribes to a result of delay monitoring from the UPF.

In an implementation, the PCF sends a subscription request to the UPF, where the subscription request may include a first monitoring report event, UE information, QoS flow information, service flow description information, an uplink delay overhead, and a downlink delay overhead.

Step 12: The PCF obtains fifth information and performs a fifth operation according to the fifth information (for example, making measurement decision, and adjusting the first QoS requirement with reference to the result of delay monitoring and the delay requirement).

The fifth information is as described in the embodiment of FIG. 6, which is not described herein.

Application scenario 3 of the embodiment of this application: Similar to application scenario 1 shown in FIG. 7. However, in step 1, the first information does not include the round-trip delay requirement for the service.

In step 5, the PCF uses a value of half of the round-trip delay requirement as the round-trip delay requirement for the service.

Application scenario 4 in the embodiments of this application:

Similar to application scenario 1 in FIG. 7, and steps 1 to 4 are not repeated herein.

In step 5, the PCF determines to perform a first operation according to the first information (such as the round-trip delay requirements), specifically including mapping the service to a tunnel (second tunnel, such as a second QoS flow) for transmitting uplink data of the service and a tunnel (third tunnel, such as a third QoS flow) for transmitting downlink data of the service separately. In this way, related processing of the first QoS flow in subsequent steps of application scenario 1 is then changed to related processing corresponding to the second QoS flow and the third QoS flow, which is not repeated herein.

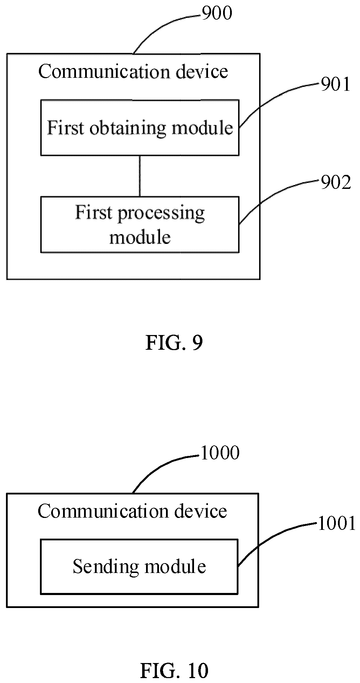

As shown in FIG. 9, an embodiment of this application provides a communication device 900, where the communication device 900 is a first communication device, including:
a first obtaining module 901, configured to obtain first information, where the first information includes at least one of the following: a round-trip delay requirement for a service, an uplink delay requirement for a service, a downlink delay requirement for a service, a first delay requirement for a service, and first indication information of a service; and
a first processing module 902, configured to perform a first operation according to the first information, where the first operation includes at least one of the following:
   mapping a first tunnel for a data flow of the service, where the first tunnel is usable for transmitting uplink data and/or downlink data of the service;
   determining QoS requirement related information of the first tunnel;
   determining first related information of a QoS requirement for the service data flow;
   mapping a second tunnel and/or mapping a third tunnel for the data flow of the service, where the second tunnel is used for transmitting uplink data of the service and the third tunnel is used for transmitting downlink data of the service;
   determining QoS requirement related information of the second tunnel and/or determining QoS requirement related information of the third tunnel;
   determining second related information of a QoS requirement for the service data flow, and/or determining third related information of a QoS requirement for the service data flow;
   determining a delay monitoring requirement, including at least one of the following: determining a delay monitoring requirement of the first tunnel, determining a delay monitoring requirement of the second tunnel, determining a delay monitoring requirement of the third tunnel, and determining a delay monitoring requirement of the data flow of the service;
   determining an uplink delay requirement for the service and a downlink delay requirement for the service according to a round-trip delay requirement for the service, where a sum of the uplink delay requirement and the downlink delay requirement for the service does not exceed the round-trip delay requirement for the service;
   using a value of half of the round-trip delay requirement for the service as the first delay requirement for the service;
   performing mapping of a first QoS identifier based on the value of half of the round-trip delay requirement for the service;
   using a value twice the first delay requirement for the service as the round-trip delay requirement for the service;
   determining first indication information of the service; and
   sending second information, where the second information includes at least one of the following: the QoS requirement related information of the first tunnel, the first related information of the QoS requirement for the service data flow, the QoS requirement related information of the second tunnel, the second related information of the QoS requirement for the service data flow, the QoS requirement related information of the third tunnel, the third related information of the QoS requirement for the service data flow, a delay monitoring requirement, and a related requirement for the service; where
   the related requirement for the service includes at least one of the following: description information of the service, the round-trip delay requirement for the service, the uplink delay requirement for the service, the downlink delay requirement for the service, the first delay requirement for the service, and the first indication information of the service.

In an implementation, a first tunnel is mapped for a data flow of the service, or QoS requirement related information of the first tunnel is determined.

In another implementation, a second tunnel and a third tunnel are mapped for the data flow of the service, or QoS requirement related information of the second tunnel and QoS requirement related information of the third tunnel are determined.

In an implementation, the second information may be carried in a policy and charging control (Policy and Charging Control, PCC) rule, for sending.

The round-trip delay requirement for the service in the second information may be the round-trip delay requirement for the service in the first information or a round-trip delay requirement for the service determined by the first communication device.

The first delay requirement for the service in the second information may be the first delay requirement in the first information or a first delay requirement determined by the first communication device.

The first indication information of the service in the second information may be the first indication information in the first information or first indication information determined by the first communication device.

Optionally, the first communication device is a PCF, an SMF, a UPF, or a RAN.

Optionally, the first information is sent by a source device A (such as a second communication device), and the source device A includes at least one of the following: an AF, and an NEF.

Optionally, the first communication device sends the second information (such as the first QoS requirement) to a target device A (such as a third communication device), where the second information may enable the target device A to determine a QoS configuration (such as a first QoS configuration) according to the QoS requirement (such as the first QoS requirement) in the second information, determine a QoS monitoring configuration based on a QoS monitoring request, and/or map data to a tunnel. The target device includes at least one of the following: an SMF, a gateway (such as a UPF), an RAN, and a terminal. For example, in a case that the first communication device is a PCF, the target device A may be an SMF. For example, if the first communication device is an SMF, the target device A may be at least one of the following: a gateway (UPF), a RAN, and a terminal.

In an implementation, sending the second information to the terminal enables the terminal to map the data flow of the service to a data tunnel according to the second information.

In an optional embodiment of this application, the QoS requirement related information of the first tunnel includes at least one of the following: identification information of the first tunnel, a first QoS requirement, and a related requirement for the service.

In an implementation, the first QoS requirement in the QoS requirement related information of the first tunnel is a first QoS requirement for the first tunnel. Values of first QoS requirements for different first tunnels may be different.

In an implementation, the service in the QoS requirement related information of the first tunnel is a service of a data flow carried by the first tunnel. Therefore, the related requirement for the service may alternatively be referred to as a related requirement for the data flow of the service.

The first related information of the QoS requirement for the service data flow includes at least one of the following: description information of the data flow of the service, the first QoS requirement, a second QoS requirement, a third QoS requirement, and the related requirement for the service.

In an implementation, the Nth QoS requirement in the first related information of the QoS requirement for the service data flow indicates the N-th QoS requirement for the data flow of the service. A value of the N-th QoS requirement for data flows of different services may be different. A value of N is at least one of the following: one, two, and three.
(1) in an implementation, the first related information of the QoS requirement for the service data flow includes at least one of the following: description information of the data flow of the service and the first QoS requirement;
(2) in another implementation, the first related information of the QoS requirement for the service data flow includes at least one of the following: description information of the data flow of the service, a second QoS requirement, a third QoS requirement, and the related requirement for the service; and
(3) in another implementation, the first related information of the QoS requirement for the service data flow includes at least one of the following: description information of the data flow of the service and the related requirement for the service;
and/or
the QoS requirement related information of the second tunnel includes at least one of the following: identification information of the second tunnel, a data direction in the tunnel, fourth indication information, a second QoS requirement, a related requirement for the service, and identification information of an associated third tunnel; where the fourth indication information is used for indicating that the tunnel is used only for transmitting uplink data;

In an implementation, the data direction in the tunnel is used to indicate that the tunnel is used only for transmitting data in the data direction.

In an implementation, the second QoS requirement in the QoS requirement related information of the second tunnel is a second QoS requirement for the second tunnel. Values of second QoS requirements for different second tunnels may be different.

In an implementation, the service in the QoS requirement related information of the second tunnel is a service of a data flow carried by the second tunnel; and therefore, the related requirement for the service may alternatively be referred to as a related requirement for the data flow of the service;
and/or
the second related information of the QoS requirement for the service data flow includes at least one of the following: the description information of the data flow of the service, the data direction of the service, the second QoS requirement, and the related requirement for the service;
   and/or
the QoS requirement related information of the third tunnel includes at least one of the following: identification information of the third tunnel, a data direction in the tunnel, fifth indication information, a third QoS requirement, a related requirement for the service, and identification information of the associated second tunnel; where the fifth indication information is used for indicating that the tunnel is used only for transmitting downlink data.

In an implementation, the third QoS requirement in the QoS requirement related information of the third tunnel is a third QoS requirement for the third tunnel. Values of third QoS requirements for different third tunnels may be different.

In an implementation, the service in the QoS requirement related information of the third tunnel is a service of a data flow carried by the third tunnel; and therefore, the related requirement for the service may alternatively be referred to as a related requirement for the data flow of the service;
the third related information of the QoS requirement for the service data flow includes at least one of the following: the description information of the data flow of the service, the data direction of the service, the third QoS requirement, and the related requirement for the service.

Optionally, the data direction includes at least one of the following: uplink and downlink.

In an implementation, a data direction in the second related information of the QoS requirement for the service data flow is uplink. In an implementation, a data direction in the third related information of the QoS requirement for the service data flow is downlink.

In an optional embodiment of this application, the first QoS requirement includes at least one of the following:
a first QoS identifier;
a first delay budget;
an uplink QoS requirement and a downlink QoS requirement;
a round-trip QoS requirement; and
second indication information; where
the second indication information is used for indicating at least one of the following:
   a round-trip delay overhead of a first object does not exceed twice the first delay requirement;
   the round-trip delay overhead of the first object does not exceed the round-trip delay requirement for the service;
   the first object requires round-trip delay guarantee;
   an uplink delay overhead of the first object is allowed to exceed an uplink delay requirement of the first object or a first delay requirement of the first object;
   a downlink delay overhead of the first object is allowed to exceed a downlink delay requirement of the first object or the first delay requirement of the first object;
   a sum of the uplink delay overhead of the first object and the downlink delay overhead of the first object does not exceed a round-trip delay requirement of the first object; and
   the sum of the uplink delay overhead of the first object and the downlink delay overhead of the first object does not exceed a value twice the first delay requirement of the first object; where
   the first object includes at least one of the following: the first tunnel and the data flow of the service.

In an optional embodiment of this application, the first delay requirement includes a time budget required for data to pass between a terminal and an anchor gateway;
and/or
the first indication information of the service is used to indicate at least one of the following:
a round-trip delay overhead of the service does not exceed twice the first delay requirement;
the round-trip delay overhead of the service does not exceed the round-trip delay requirement for the service;
the service requires round-trip delay guarantee;
the uplink delay requirement for the service is different from the downlink delay requirement;
an uplink delay overhead of the service is allowed to exceed the uplink delay requirement for the service or the first delay requirement for the service;
a downlink delay overhead of the service is allowed to exceed the downlink delay requirement or the first delay requirement for the service;
a sum of the uplink delay overhead and the downlink delay overhead of the service does not exceed the round-trip delay requirement for the service; and
the sum of the uplink delay overhead and the downlink delay overhead of the service does not exceed a value twice the first delay requirement for the service.

In an optional embodiment of this application, the identification information of the first tunnel includes at least one of the following: a tunnel identifier of the first tunnel, a first QoS identifier of the first tunnel, an uplink QoS identifier of the first tunnel, and a downlink QoS identifier of the first tunnel.

In an optional embodiment of this application, the first QoS identifier is able to be mapped to at least one of the following: uplink values and/or downlink values of a group of QoS parameters, values of a group of uplink QoS parameters, downlink values of a group of downlink QoS parameters, and values of a group of QoS parameters.

In an implementation, an uplink value and a downlink value of a same QoS parameter are the same or different.

In an implementation, in a case that the first QoS identifier is able to be mapped to values of a group of QoS parameters, it means that the uplink value and downlink value of the QoS parameter are the same.

Optionally, the QoS parameter includes a delay budget, such as a first delay budget.

In an implementation, the first tunnel is identified by a tunnel identifier (such as a QFI identifier) of the first tunnel.

In another implementation, the first tunnel is identified by a QoS identifier of the first tunnel, and the QoS identifier is used to identify an uplink QoS parameter and a downlink QoS parameter. In one case, the uplink QoS parameter and the downlink QoS parameter of the first tunnel have a same value, so the uplink QoS identifier and the downlink QoS identifier have a same value, and the first tunnel is identified by any one of the uplink QoS identifier and the downlink QoS identifier. In another case, the uplink QoS parameter and downlink QoS parameter of the first tunnel may have different values, so one QoS identifier used for identifying the first tunnel is mapped to the uplink QoS parameter and downlink QoS parameter, and the uplink QoS parameter and downlink QoS parameter may have different values.

In another implementation, the first tunnel uses an uplink QoS identifier of the first tunnel and a downlink QoS identifier of the first tunnel. It is not difficult to understand that the uplink QoS identifier and the downlink QoS identifier have different values in this case.

In an optional embodiment of this application, the uplink QoS requirement includes at least one of the following: an uplink QoS identifier, and an uplink delay budget;
and/or
the downlink QoS requirement includes at least one of the following: a downlink QoS identifier and a downlink delay budget.

In an implementation, a priority of the uplink delay budget is higher than that of an uplink delay budget mapped by the uplink QoS identifier. In a case that the uplink QoS requirement includes (1) the uplink QoS identifier and (2) the uplink delay budget, a value of the uplink delay budget is used as a delay budget of uplink data.

In an implementation, a priority of the uplink delay budget is higher than that of an uplink delay budget or a delay budget mapped by the first QoS identifier. In a case that the first QoS requirement includes (1) the first QoS identifier and (2) the uplink QoS requirement, and the uplink QoS requirement includes the uplink delay budget, a value of the uplink delay budget is used as a delay budget of uplink data.

In an implementation, a priority of the uplink QoS identifier is higher than that of the first QoS identifier. In a case that the first QoS requirement includes (1) the first QoS identifier and (2) the uplink QoS requirement, and the uplink QoS requirement includes the uplink QoS identifier, a value of the uplink QoS identifier is used as a QoS parameter requirement of the uplink data.

In an implementation, a priority of the downlink delay budget is higher than that of a downlink delay budget mapped by the downlink QoS identifier. In a case that the downlink QoS requirement includes (1) the downlink QoS identifier and (2) the downlink delay budget, a value of the downlink delay budget is used as a delay budget of the downlink data.

In an implementation, a priority of the downlink delay budget is higher than that of a downlink delay budget or a delay budget mapped by the first QoS identifier. In a case that the first QoS requirement includes (1) the first QoS identifier and (2) the downlink QoS requirement, and the downlink QoS requirement includes the downlink delay budget, a value of a QoS parameter mapped by the downlink delay budget is used as a delay budget of the downlink data.

In an implementation, a priority of the downlink QoS identifier is higher than that of the first QoS identifier. In a case that the first QoS requirement includes (1) the first QoS identifier and (2) the downlink QoS requirement, and the downlink QoS requirement includes the downlink QoS identifier, a value of a QoS parameter mapped by the downlink QoS identifier is used as a QoS parameter requirement of the downlink data.

In an optional embodiment of this application, the round-trip QoS requirement includes:
a round trip QoS identifier, a round-trip delay budget, and a round trip error rate.

In an optional embodiment of this application, when the first processing module 902 is configured to perform at least one of the following: mapping a first tunnel for a data flow of the service, determining QoS requirement related information of the first tunnel, and determining first related information of a QoS requirement for the service data flow, the first processing module 902 is specifically configured to:
in a case that a first condition is met, perform at least one of the following: mapping the first tunnel for the data flow of the service, determining the QoS requirement related information of the first tunnel, and determining the first related information of the QoS requirement for the service data flow; where
the first condition includes at least one of the following:
   the service requires round-trip delay guarantee;
   it is determined that the uplink delay requirement for the service is the same as the downlink delay requirement for the service;
   it is determined that an uplink value of a QoS parameter of the service is the same as a value of a downlink QoS parameter;
   it is determined that a QoS identifier mapped for uplink data of the service is the same as a QoS identifier mapped for downlink data of the service;
   it is determined to use a value of half of the round-trip delay requirement for the service as the first delay requirement for the service or the first tunnel; and
   it is determined to perform mapping of a first QoS identifier based on the value of half of the round-trip delay requirement for the service.

In an optional embodiment of this application, when the first processing module 902 is configured to perform at least one of the following: mapping a second tunnel and/or a third tunnel for the data flow of the service, determining QoS requirement related information of the second tunnel and/or determining QoS requirement related information of the third tunnel, and determining second related information of a QoS requirement for the service data flow and/or determining third related information of a QoS requirement for the service data flow, the first processing module 902 is specifically configured to:
in a case that a second condition is met, perform at least one of the following: mapping the second tunnel and/or the third tunnel for the data flow of the service, determining the QoS requirement related information of the second tunnel and/or the QoS requirement related information of the third tunnel, and determining the second related information of the QoS requirement for the service data flow and/or determining the third related information of the QoS requirement for the service data flow; where
the second condition includes at least one of the following:
   the service requires round-trip delay guarantee;
   it is determined that the uplink delay requirement for the service is different from the downlink delay requirement for the service;
   it is determined that an uplink value of a QoS parameter of the service is different from a value of a downlink QoS parameter; and
   it is determined that a QoS identifier mapped for uplink data of the service is different from a QoS identifier mapped for downlink data of the service.

In an optional embodiment of this application, when the first processing module 902 is configured to perform the operation of determining the first QoS requirement, the first processing module 902 is specifically configured to perform at least one of the following:
performing at least one of the following according to the round-trip delay requirement for the service: splitting the round-trip delay requirement for the service to map to an uplink requirement and a downlink requirement in the first QoS requirement; splitting the round-trip delay requirement for the service into an uplink delay requirement for the service and a downlink delay requirement for the service; mapping the uplink delay requirement for the service obtained through splitting to the uplink requirement in the first QoS requirement; mapping the downlink delay requirement for the service obtained through splitting to the downlink requirement in the first QoS requirement; and splitting the round-trip delay requirement for the service to map to a first QoS identifier in the first QoS requirement;
performing at least one of the following based on a value of half of the round-trip delay requirement for the service: mapping the value of half of the round-trip delay requirement for the service to a first delay budget in the first QoS requirement, and mapping the value of half of the round-trip delay requirement for the service to the first QoS identifier in the first QoS requirement;
performing at least one of the following based on a value twice the first delay requirement for the service: using the value twice the first delay requirement for the service as a round-trip delay budget of the service, and mapping the value twice the first delay requirement for the service to a round-trip QoS requirement or the round-trip delay budget in the first QoS requirement;
performing at least one of the following according to the uplink delay requirement for the service: mapping the uplink delay requirement for the service to the uplink requirement in the first QoS requirement, and mapping the uplink delay requirement for the service to the first QoS identifier in the first QoS requirement; and
performing at least one of the following according to the downlink delay requirement for the service: mapping the downlink delay requirement for the service to the downlink requirement in the first QoS requirement, and mapping a downlink delay budget of the service to the first QoS identifier in the first QoS requirement;
   where
the uplink requirement includes at least one of the following: an uplink QoS requirement, an uplink delay budget, and an uplink QoS identifier; and
the downlink requirement includes at least one of the following: a downlink QoS requirement, a downlink delay budget, and a downlink QoS identifier.

In an optional embodiment of this application, a sum of an uplink delay budget in the first QoS requirement and a downlink delay budget in the first QoS requirement does not exceed the round-trip delay requirement for the service.

In an implementation, the uplink delay budget is at least one of the following:
an independent uplink delay budget parameter;
a value of an independent first delay budget parameter;
a value of an uplink delay budget mapped by the QoS identifier (such as the first QoS identifier and the uplink QoS identifier) in the first QoS requirement; and
a value of a first delay budget mapped by the QoS identifier (such as the first QoS identifier and the uplink QoS identifier) in the first QoS requirement.

The uplink delay budget is subject to a delay budget with the highest priority.

In an implementation, the downlink delay budget is at least one of the following:
an independent downlink delay budget parameter;
a value of an independent first delay budget parameter;
a value of a downlink delay budget mapped by the QoS identifier (such as the first QoS identifier and the downlink QoS identifier) in the first QoS requirement; and
a value of a first delay budget mapped by the QoS identifier (such as the first QoS identifier and the downlink QoS identifier) in the first QoS requirement.

The downlink delay budget is subject to a delay budget with the highest priority.

In an optional embodiment of this application, when the first processing module 902 is configured to perform the operation of determining the second QoS requirement, the first processing module 902 is specifically configured to perform at least one of the following:
performing at least one of the following according to the round-trip delay requirement for the service: splitting the round-trip delay requirement for the service into an uplink delay requirement and a downlink delay requirement for the service, mapping a delay budget in the second QoS requirement according to the uplink delay requirement obtained through splitting, and mapping a QoS identifier in the second QoS requirement according to the uplink delay requirement obtained through splitting; and
performing at least one of the following according to the uplink delay requirement for the service: mapping the delay budget in the second QoS requirement according to the uplink delay requirement for the service, and mapping the QoS identifier in the second QoS requirement according to the uplink delay requirement for the service;
   and/or
the first processing module 902 is configured to perform the operation of determining the third QoS requirement, including at least one of the following:
   performing at least one of the following according to the round-trip delay requirement for the service: splitting the round-trip delay requirement for the service into an uplink delay requirement and a downlink delay requirement for the service, mapping a delay budget in the third QoS requirement according to the downlink delay requirement for the service obtained through splitting, and mapping a QoS identifier in the third QoS requirement according to the downlink delay requirement for the service obtained through splitting; and
   performing at least one of the following according to the downlink delay requirement for the service: mapping the delay budget in the third QoS requirement according to the downlink delay requirement for the service, and mapping the QoS identifier in the third QoS requirement according to the downlink delay requirement for the service.

In an optional embodiment of this application, a sum of the uplink delay requirement and the downlink delay requirement for the service does not exceed at least one of the following: the round-trip delay requirement for the service, and a value twice the first delay requirement for the service.

Optionally, the sum of the uplink delay budget and the downlink delay budget of the first tunnel does not exceed the round-trip delay budget of the first tunnel.

In an implementation, the first information includes the uplink delay requirement for the service and the downlink delay requirement for the service, and the first QoS requirement being determined by the first communication device is specifically implemented as follows: mapping the uplink delay requirement (which may be referred to as the first uplink delay requirement) of the service to an uplink QoS requirement in the first QoS requirement, and mapping the downlink delay requirement (which may be referred to as the first downlink delay requirement) of the service to a downlink QoS requirement in the first QoS requirement.

In an implementation, the first information includes the round-trip delay requirement for the service, and the first QoS requirement being determined by the first communication device is specifically implemented as follows: performing splitting based on the round-trip delay requirement for the service to obtain an uplink delay requirement (which may be referred to as the second uplink delay requirement) and a downlink delay requirement (which may be referred to as the second downlink delay requirement) of the service, mapping the second uplink delay requirement to the uplink QoS requirement in the first QoS requirement, and mapping the second downlink delay requirement to the downlink QoS requirement in the first QoS requirement. The round-trip delay requirement for the service may be divided based on a pre-configured empirical value for round-trip delay division or a result of QoS monitoring. The empirical value for round-trip delay division may be 1/2.

In an implementation, the first communication device may use 1/2 of the round-trip delay requirement for the service as the uplink delay requirement for the service, so as to map the uplink delay requirement for the service to the uplink delay budget in the first QoS requirement. For example, in a case that no delay budget mapped by the first QoS identifier is equal to 1/2 of the round-trip delay requirement, the first QoS requirement includes the uplink delay budget and the first QoS identifier, a value of the uplink delay budget is equal to 1/2 of the round-trip delay requirement, and the downlink delay budget mapped by the first QoS identifier is not equal to 1/2 of the round-trip delay requirement. Because the priority of the uplink delay budget is higher than that of the first QoS identifier, the value of the uplink delay budget of the first QoS requirement is 1/2 of the round-trip delay requirement.

In an implementation, 1/2 of the round-trip delay requirement for the service is used as the downlink delay requirement for the service, so that the downlink delay requirement for the service is mapped to the first QoS identifier of the first QoS requirement. For example, in a case that no delay budget mapped by the first QoS identifier is equal to 1/2 of the round-trip delay requirement, the first QoS requirement includes the first QoS identifier, so a value of the uplink delay budget of the first QoS requirement is 1/2 of the round-trip delay requirement.

Therefore, for example, the first QoS requirement includes the first uplink delay budget and the first QoS identifier. In this case, the value of the first uplink delay budget is equal to 1/2 of the round-trip delay requirement, and the value of the downlink delay budget (which may be referred to as the second uplink delay budget) corresponding to the first QoS identifier is also equal to 1/2 of the round-trip delay requirement.

In an optional embodiment of this application, the communication device 900 further includes:
a fifth obtaining module, configured to obtain third information, where the third information is used for indicating a result of delay monitoring; and
when the first processing module 902 is configured to perform the first operation according to the first information, the first processing module 902 is specifically configured to perform the first operation according to the first information and the third information.

In an optional embodiment of this application, the result of the delay monitoring includes at least one of the following:
a result of uplink delay monitoring;
a result of downlink delay monitoring; and
a result of round-trip delay monitoring.

In an optional embodiment of this application, the communication device 900 further includes:
a fifth processing module, configured to perform at least one of the following according to the first information:
determining a delay monitoring requirement; and
sending the delay monitoring requirement; where
the delay monitoring requirement includes at least one of the following: a delay monitoring requirement for the first tunnel, a delay monitoring requirement for the second tunnel, a delay monitoring requirement for the third tunnel, and a delay monitoring requirement for the data flow of the service; and/or the delay monitoring requirement includes at least one of the following:
   description information of a tunnel that requires delay monitoring;
   description information of a service that requires delay monitoring;
   an uplink delay monitoring requirement;
   a downlink delay monitoring requirement; and
   a round-trip delay monitoring requirement.

Optionally, the delay monitoring requirement may be used for monitoring a delay overhead in the tunnel. The uplink delay monitoring requirement is used for monitoring an uplink delay overhead. The downlink delay monitoring requirement is used for monitoring a downlink delay overhead.

Optionally, the first communication device sends the delay monitoring requirement of the tunnel to a target device B (such as the third communication device). The delay monitoring requirement may enable the target device B to determine a delay monitoring configuration and/or send the delay monitoring configuration according to the delay monitoring requirement of the tunnel. For example, in a case that the first communication device is a PCF, the target device B may be an SMF. For example, if the first communication device is an SMF, the target device B may be at least one of the following: a gateway (such as a UPF), a RAN, and a terminal.

The tunnel may include the first tunnel, the second tunnel and the third tunnel.

As shown in FIG. 10, an embodiment of this application further provides a communication device 1000, where the communication device 1000 is a second communication device, including:
a sending module 1001, configured to send first information.

The first information includes at least one of the following: a round-trip delay requirement for a service, an uplink delay requirement for a service, a downlink delay requirement for a service, a first delay requirement for a service, and first indication information of a service.

In an optional embodiment of this application, the sending module 1001 is specifically configured to:
send the first information in a case that a third condition is satisfied; where
the third condition includes at least one of the following:
   the service requires round-trip delay guarantee;
   the uplink delay requirement for the service is different from the downlink delay requirement for the service; and
   a QoS guarantee requirement for the service is received or generated.

In an optional embodiment of this application, the round-trip delay requirement for the service is used for requesting to perform at least one of the following for the service according to the round-trip delay requirement for the service: round-trip delay guarantee, uplink delay guarantee, and downlink delay guarantee;
the uplink delay requirement for the service is used for requesting to guarantee an uplink delay of the service according to the uplink delay requirement for the service; and
the downlink delay requirement for the service is used for requesting to guarantee a downlink delay of the service according to the downlink delay requirement for the service;
   and/or
the first delay requirement for the service and/or the first indication information of the service is used to indicate at least one of the following:
   a round-trip delay overhead of the service does not exceed twice the first delay requirement;
   the round-trip delay overhead of the service does not exceed the round-trip delay requirement for the service;
   the service requires round-trip delay guarantee;
   the uplink delay requirement for the service is different from the downlink delay requirement;
   an uplink delay overhead of the service is allowed to exceed the uplink delay requirement for the service or the first delay requirement for the service;
   a downlink delay overhead of the service is allowed to exceed the downlink delay requirement or the first delay requirement for the service;
   a sum of the uplink delay overhead and the downlink delay overhead of the service does not exceed the round-trip delay requirement for the service; and
   the sum of the uplink delay overhead and the downlink delay overhead of the service does not exceed a value twice the first delay requirement for the service.

In an implementation, the second communication device sends the first information to a target device C (such as a first communication device). The second communication device includes at least one of an AF and an NEF.

For example, in a case that the second communication device is an AF, the target device C is at least one of an NEF and a PCF. For example, in a case that the second communication device is a PCF, the target device C may be an SMF. For example, in a case that the second communication device is an NEF, the target device C may be a PCF.

In an implementation, the round-trip delay guarantee indicates that the round-trip delay overhead does not exceed the round-trip delay requirement or a value twice the first delay requirement.

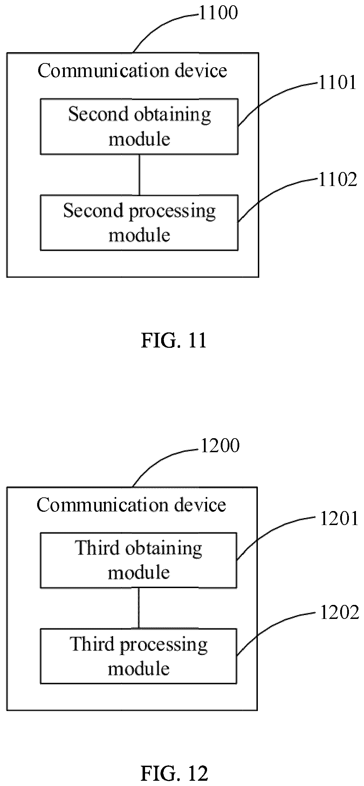

As shown in FIG. 11, an embodiment of this application further provides a communication device 1100, where the communication device 1100 is a third communication device, including a second obtaining module 1101 and a second processing module 1102.

The second obtaining module 1101 is configured to obtain second information, where the second information includes at least one of the following: QoS requirement related information of a first tunnel, first related information of a QoS requirement for a service data flow, QoS requirement related information of a second tunnel, second related information of the QoS requirement for the service data flow, QoS requirement related information of a third tunnel, third related information of the QoS requirement for the service data flow, a delay monitoring requirement, and a related requirement for the service.

In an implementation, the second information may be carried in a PCC rule.

The second processing module 1102 is configured to perform a second operation according to the second information, where the second operation includes at least one of the following:
mapping the first tunnel for the data flow of the service, where the first tunnel is usable for transmitting uplink data and/or downlink data of the service;
determining QoS configuration related information of the first tunnel;
mapping the second tunnel and/or the third tunnel for the data flow of the service, where the second tunnel is used for transmitting uplink data of the service and the third tunnel is used for transmitting downlink data of the service;
determining QoS configuration related information of the second tunnel;
determining QoS configuration related information of the third tunnel;
determining a delay monitoring configuration, including at least one of the following: determining a delay monitoring configuration of the first tunnel, determining a delay monitoring configuration of the second tunnel, determining a delay monitoring configuration of the third tunnel, and determining a delay monitoring configuration of the data flow of the service;
determining a QoS configuration of a second object; and
sending fourth information, where the fourth information includes at least one of the following: QoS configuration related information of the first tunnel, QoS configuration related information of the second tunnel, QoS configuration related information of the third tunnel, the delay monitoring configuration, and the QoS configuration of the second object; where
the QoS configuration of the second object includes at least one of the following: a round-trip delay configuration of the second object, a first delay configuration of the second object, and second indication information of the second object.

In an optional embodiment of this application, the QoS configuration related information of the first tunnel includes at least one of the following: identification information of the first tunnel, a first QoS configuration, and a related requirement for the service;
and/or
the QoS configuration related information of the second tunnel includes at least one of the following: identification information of the second tunnel, a data direction in the tunnel, fourth indication information, a second QoS configuration, the QoS configuration of the second object, and identification information of an associated third tunnel; where the fourth indication information is used for indicating that the tunnel is used only for transmitting uplink data;
   and/or
the QoS configuration related information of the third tunnel includes at least one of the following: identification information of the third tunnel, a data direction in the tunnel, fifth indication information, a third QoS configuration, the QoS configuration of the second object, and identification information of an associated second tunnel; where the fifth indication information is used for indicating that the tunnel is used only for transmitting downlink data.

Optionally, the data direction includes at least one of the following: uplink and downlink.

In an implementation, a data direction in the second related information of the QoS requirement for the service data flow is uplink. In an implementation, a data direction in the third related information of the QoS requirement for the service data flow is downlink.

In an optional embodiment of this application, when the second processing module 1102 is configured to perform the operation of determining the QoS configuration of the second object, the second processing module 1102 is specifically configured to perform at least one of the following:
mapping a first delay budget in the QoS configuration of the second object based on a value of half of a round-trip delay requirement for the service;
mapping a first QoS identifier in the QoS configuration of the second object based on the value of half of a round-trip delay requirement for the service;
mapping a round-trip delay budget in the QoS configuration of the second object based on a value twice a first delay requirement for the service;
mapping second indication information in the QoS configuration of the second object according to second indication information of the service;
mapping a first delay budget in the QoS configuration of the second object based on the first delay requirement for the service; and
using a sum of a delay budget in the second QoS configuration and a delay budget in the third QoS configuration as the round-trip delay budget in the QoS configuration of the second object; where
the second object includes at least one of the following: a tunnel group, and the data flow of the service.

In an implementation, the tunnel group consists of the second tunnel and the third tunnel.

In an optional embodiment of this application, the first QoS configuration includes at least one of the following:
a first QoS identifier;
a first delay budget;
an uplink QoS configuration and a downlink QoS configuration;
a round-trip QoS configuration; and
second indication information; where
the second indication information is used for indicating at least one of the following:
   a round-trip delay overhead of a first object does not exceed twice a first delay requirement;
   the round-trip delay overhead of the first object does not exceed the round-trip delay requirement for the service;
   the first object requires round-trip delay guarantee;
   an uplink delay overhead of the first object is allowed to exceed an uplink delay requirement of the first object or a first delay requirement of the first object;
   a downlink delay overhead of the first object is allowed to exceed a downlink delay requirement of the first object or the first delay requirement of the first object;
   a sum of the uplink delay overhead of the first object and the downlink delay overhead of the first object does not exceed a round-trip delay requirement of the first object; and
   the sum of the uplink delay overhead of the first object and the downlink delay overhead of the first object does not exceed a value twice the first delay requirement of the first object; where
   the first object includes at least one of the following: the first tunnel.

In an optional embodiment of this application, the uplink QoS configuration includes at least one of the following:
a downlink QoS identifier and an uplink delay budget;
   and/or
the downlink QoS configuration includes at least one of the following:
   a downlink QoS identifier and a downlink delay budget.

In an optional embodiment of this application, the QoS requirement related information of the first tunnel includes at least one of the following: identification information of the first tunnel, a first QoS requirement, and a related requirement for the service; and
the first related information of the QoS requirement for the service data flow includes at least one of the following: description information of the data flow of the service, the first QoS requirement, a second QoS requirement, a third QoS requirement, and the related requirement for the service;
   and/or
the QoS requirement related information of the second tunnel includes at least one of the following: identification information of the second tunnel, a data direction in the tunnel, fourth indication information, a second QoS requirement, a related requirement for the service, and identification information of an associated third tunnel; where the fourth indication information is used for indicating that the tunnel is used only for transmitting uplink data;
   and/or
the second related information of the QoS requirement for the service data flow includes at least one of the following: the description information of the data flow of the service, the data direction of the service, the second QoS requirement, and the related requirement for the service;
   and/or
the QoS requirement related information of the third tunnel includes at least one of the following: identification information of the third tunnel, a data direction in the tunnel, fifth indication information, a third QoS requirement, a related requirement for the service, and identification information of the associated second tunnel; where the fifth indication information is used for indicating that the tunnel is used only for transmitting downlink data;
the third related information of the QoS requirement for the service data flow includes at least one of the following: the description information of the data flow of the service, the data direction of the service, the third QoS requirement, and the related requirement for the service.

In an optional embodiment of this application, when the second processing module 1102 is configured to perform the operation of determining the first QoS configuration, the second processing module 1102 is specifically configured to perform at least one of the following:
determining the first QoS configuration according to the first QoS requirement;
performing at least one of the following according to the round-trip delay requirement for the service: splitting the round-trip delay requirement for the service to map to an uplink configuration and a downlink configuration in the first QoS configuration; splitting the round-trip delay requirement for the service into an uplink delay requirement for the service and a downlink delay requirement for the service; mapping the uplink delay requirement for the service obtained through splitting to the uplink configuration in the first QoS configuration; mapping the downlink delay requirement for the service obtained through splitting to the downlink configuration in the first QoS configuration; and splitting the round-trip delay requirement for the service to map to a first QoS identifier in the first QoS configuration;
performing at least one of the following based on a value of half of the round-trip delay requirement for the service: mapping the value of half of the round-trip delay requirement for the service to a first delay budget in the first QoS configuration, and mapping the value of half of the round-trip delay requirement for the service to the first QoS identifier in the first QoS configuration;
performing at least one of the following based on a value twice a first delay requirement for the service: using the value twice the first delay requirement for the service as a round-trip delay budget of the service, and mapping the value twice the first delay requirement for the service to a round-trip QoS configuration or the round-trip delay budget in the first QoS configuration;
performing at least one of the following according to the uplink delay requirement for the service: mapping the uplink delay requirement for the service to the uplink configuration in the first QoS configuration, and mapping the uplink delay requirement for the service to the first QoS identifier in the first QoS configuration; and
performing at least one of the following according to the downlink delay requirement for the service: mapping the downlink delay requirement for the service to the downlink configuration in the first QoS configuration, and mapping a downlink delay budget of the service to the first QoS identifier in the first QoS configuration;
   where
the uplink configuration includes at least one of the following: an uplink QoS configuration, an uplink delay budget, and an uplink QoS identifier; and
the downlink configuration includes at least one of the following: a downlink QoS configuration, a downlink delay budget, and a downlink QoS identifier.

In an implementation, the first QoS requirement is at least one of the following: the first QoS requirement in the QoS requirement related information of the first tunnel; and the first QoS requirement in first related information of the QoS requirement for the service data flow.

In an optional embodiment of this application, a sum of an uplink delay budget in the first QoS configuration and a downlink delay budget in the first QoS configuration does not exceed at least one of the following: the round-trip delay requirement for the service, and a value twice the first delay requirement for the service.

In an implementation, the uplink delay budget is a value of an uplink delay budget parameter or a delay budget value mapped by the uplink QoS identifier.

In another implementation, the downlink delay budget is a value of a downlink delay budget parameter or a delay budget value mapped by the downlink QoS identifier.

In an optional embodiment of this application, when the second processing module 1102 is configured to perform the operation of determining the second QoS configuration, the second processing module 1102 is specifically configured to perform at least one of the following:
determining the second QoS configuration according to the second QoS requirement;
performing at least one of the following according to the round-trip delay requirement for the service: splitting the round-trip delay requirement for the service into an uplink delay requirement and a downlink delay requirement for the service, mapping a delay budget in the second QoS configuration according to the uplink delay requirement obtained through splitting, and mapping a QoS identifier in the second QoS configuration according to the uplink delay requirement obtained through splitting; and
performing at least one of the following according to the uplink delay requirement for the service: mapping the delay budget in the second QoS configuration according to the uplink delay requirement for the service, and mapping the QoS identifier in the second QoS configuration according to the uplink delay requirement for the service;
   and/or
when the second processing module 1102 is configured to perform the operation of determining the third QoS third QoS configuration, the second processing module 1102 is specifically configured to perform at least one of the following:
   determining the third QoS configuration according to the third QoS requirement;
   performing at least one of the following according to the round-trip delay requirement for the service: splitting the round-trip delay requirement for the service into an uplink delay requirement and a downlink delay requirement for the service, mapping a delay budget in the third QoS configuration according to the downlink delay requirement for the service obtained through splitting, and mapping a QoS identifier in the third QoS configuration according to the downlink delay requirement for the service obtained through splitting; and
   performing at least one of the following according to the downlink delay requirement for the service: mapping the delay budget in the third QoS configuration according to the downlink delay requirement for the service, and mapping the QoS identifier in the third QoS configuration according to the downlink delay requirement for the service.

In an implementation, the second QoS requirement is at least one of the following: the second QoS requirement in the QoS requirement related information of the second tunnel; and the second QoS requirement in second related information of the QoS requirement for the service data flow.

In an implementation, the third QoS requirement is at least one of the following: the third QoS requirement in the QoS requirement related information of the third tunnel; and the third QoS requirement in third related information of the QoS requirement for the service data flow.

In an optional embodiment of this application, the communication device 1100 further includes:
a sixth processing module, configured to determine a delay monitoring requirement, where the delay monitoring requirement includes at least one of the following:
description information of a tunnel that requires delay monitoring, description information of a service that requires delay monitoring, an uplink delay monitoring requirement, a downlink delay monitoring requirement, and a round-trip delay monitoring requirement; and

The third communication device performs at least one of the following according to the delay monitoring requirement: determining a delay monitoring configuration, and sending the delay monitoring configuration; where
the delay monitoring configuration includes at least one of the following: a delay monitoring configuration of the first tunnel, a delay monitoring configuration of the second tunnel, a delay monitoring configuration of the third tunnel, and a delay monitoring configuration of the data flow of the service.

Optionally, the third communication device sends the fourth information to a target device D (such as a fourth communication device). The target device D may be at least one of the following: a gateway (such as a UPF), a RAN, and a terminal. The fourth information may enable the target device D to perform resource scheduling, delay guarantee, and/or mapping of data to a tunnel according to the fourth information.

In an implementation, the QoS configuration related information of the second tunnel is sent to a first end device (such as a terminal, or a first terminal) according to the data direction in the tunnel in the QoS configuration related information of the second tunnel or the fourth indication information.

In an implementation, the QoS configuration related information of the third tunnel is sent to a second end device (such as a gateway or a second terminal) according to the data direction in the tunnel in the QoS configuration related information of the third tunnel or the fifth indication information.

As shown in FIG. 12, an embodiment of this application further provides a communication device 1200, where the communication device 1200 is a fourth communication device, including:
a third obtaining module 1201, configured to obtain second information or fourth information; and
a third processing module 1202, configured to perform a fourth operation according to the fourth information, where the fourth operation includes at least one of the following:
a related operation of a first tunnel; and
a related operation of a second tunnel and/or a third tunnel.

The second information includes at least one of the following: QoS requirement related information of the first tunnel, first related information of a QoS requirement for a service data flow, QoS requirement related information of the second tunnel, second related information of the QoS requirement for the service data flow, QoS requirement related information of the third tunnel, third related information of the QoS requirement for the service data flow, a delay monitoring requirement, and a related requirement for the service; and
the fourth information includes at least one of the following: QoS configuration related information of the first tunnel, QoS configuration related information of the second tunnel, QoS configuration related information of the third tunnel, a delay monitoring configuration, and a QoS configuration of a second object; where
the related operation of the first tunnel includes at least one of the following:
   guaranteeing that a round-trip delay overhead of data of the first tunnel does not exceed twice a first delay budget or does not exceed a round-trip delay budget;
   in a case that an uplink delay overhead exceeds an uplink delay budget or the first delay budget, guaranteeing that a sum of an uplink delay overhead and a downlink delay overhead of the first tunnel does not exceed a round-trip delay budget of the first tunnel;
   in a case that the downlink delay overhead exceeds a downlink delay budget or the first delay budget, guaranteeing that the sum of the uplink delay overhead and the downlink delay overhead of the first tunnel does not exceed the round-trip delay budget of the first tunnel;
   guaranteeing an uplink delay overhead based on an uplink delay budget of the first tunnel, where the uplink delay budget is at least one of the following: an uplink delay configuration in a first QoS configuration, an uplink delay budget mapped by an uplink QoS identifier, an uplink delay budget mapped by a first QoS identifier, a value obtained through the round-trip delay budget minus a downlink delay average overhead, and a value obtained through twice the first delay budget minus the downlink delay average overhead;
   guaranteeing a downlink delay overhead based on a downlink delay budget of the first tunnel, where the downlink delay budget is at least one of the following: a downlink delay configuration in the first QoS configuration, an uplink delay budget mapped by a downlink QoS identifier, a downlink delay budget mapped by a first QoS identifier, a value obtained through the round-trip delay budget minus an uplink delay average overhead, and a value obtained through twice the first delay budget minus the uplink delay average overhead;
   performing resource allocation and data scheduling according to the first QoS configuration; and
   mapping the data flow of the service to a first data tunnel.

The related operation of the second tunnel and/or the third tunnel includes at least one of the following:
guaranteeing that a sum of a delay overhead of the second tunnel and a delay overhead of the third tunnel does not exceed twice a first delay budget of the second object, or does not exceed a round-trip delay budget of the second object;
in a case that an overhead of the second tunnel exceeds a delay budget of the second tunnel, guaranteeing that the sum of the delay overhead of the second tunnel and the delay overhead of the third tunnel does not exceed the round-trip delay budget of the second object;
in a case that a delay overhead of the third tunnel exceeds a delay budget of the third tunnel, guaranteeing that a sum of the uplink delay overhead of the first tunnel and the delay overhead of the third tunnel does not exceed the round-trip delay budget of the second object;
performing resource allocation and data scheduling according to the first QoS configuration;
mapping uplink data of the service to a second data tunnel; and
mapping downlink data of the service to a third data tunnel.

In an optional embodiment of this application, the first QoS configuration includes at least one of the following:
a first QoS identifier;
a first delay budget;
an uplink QoS configuration and a downlink QoS configuration;
a round-trip QoS configuration; and
second indication information; where
the second indication information is used for indicating at least one of the following:
   a round-trip delay overhead of a first object does not exceed twice a first delay requirement;
   the round-trip delay overhead of the first object does not exceed a round-trip delay requirement for the service;
   the first object requires round-trip delay guarantee;
   an uplink delay overhead of the first object is allowed to exceed an uplink delay requirement of the first object or a first delay requirement of the first object;
   a downlink delay overhead of the first object is allowed to exceed a downlink delay requirement of the first object or the first delay requirement of the first object;
   a sum of the uplink delay overhead of the first object and the downlink delay overhead of the first object does not exceed a round-trip delay requirement of the first object; and
   the sum of the uplink delay overhead of the first object and the downlink delay overhead of the first object does not exceed a value twice the first delay requirement of the first object; where
   the first object includes at least one of the following: the first tunnel.

In an optional embodiment of this application, the uplink QoS configuration includes at least one of the following:
a downlink QoS identifier and an uplink delay budget;
   and/or
the downlink QoS configuration includes at least one of the following:
   a downlink QoS identifier and a downlink delay budget.

In an implementation, in a case that the fourth communication device is a first end (a terminal or a first terminal), the related operation of the second tunnel and/or the third tunnel includes at least one of the following: mapping uplink data of the service to the second data tunnel and receiving downlink data of the service from the third data tunnel.

In an implementation, in a case that the fourth communication device is a second end (a gateway (such as a UPF) or a second terminal), the related operation of the second tunnel and/or the third tunnel includes at least one of the following: mapping downlink data of the service to the third data tunnel and receiving uplink data of the service from the second data tunnel.

In an optional embodiment of this application, when the third processing module 1202 is configured to map the data flow of the service to the second data tunnel, the third processing module 1202 is specifically configured to:
map the data flow of the service to the third data tunnel in a case that a fifth condition is met; where
the fifth condition includes at least one of the following:
   a value of a data direction in QoS related information of the second data tunnel is uplink;
   the second data tunnel is used only for transmitting uplink data; and
   a value of a data direction in QoS-related configuration information of the second data tunnel is uplink;
      and/or
   when the third processing module 1202 is configured to map the data flow of the service to the first data tunnel, the third processing module 1202 is specifically configured to:
      map the data flow of the service to the third data tunnel in a case that a sixth condition is met; where
      the sixth condition includes at least one of the following:
         a value of a data direction in QoS related information of the third data tunnel is downlink;
         the third data tunnel is used only for transmitting downlink data; and
         a value of a data direction in QoS-related configuration information of the third data tunnel is downlink.

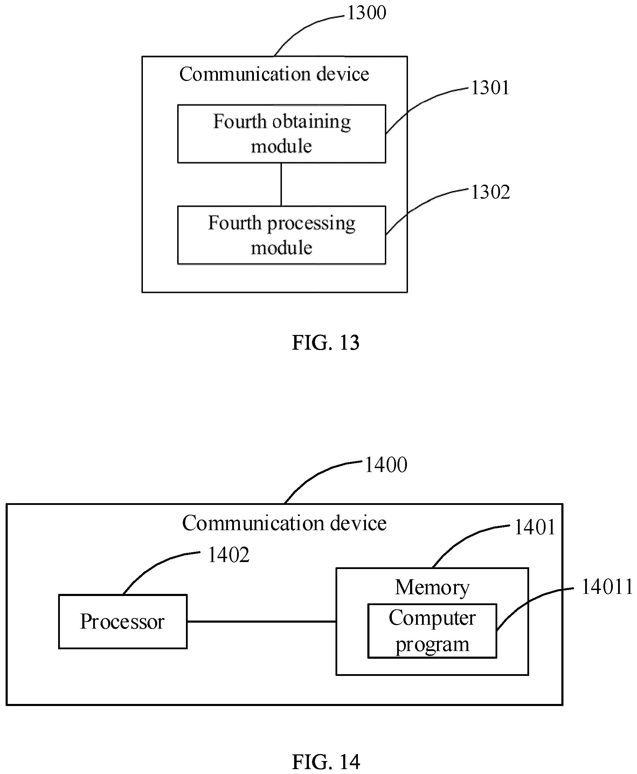

As shown in FIG. 13, an embodiment of this application further provides a communication device 1300, where the communication device 1300 is a fifth communication device, including:
a fourth obtaining module 1301, configured to obtain fifth information, where the fifth information includes a result of delay monitoring; and
a fourth processing module 1302, configured to perform a fifth operation according to the fifth information, where the fifth operation includes at least one of the following:
   generating or updating an uplink delay requirement and/or a downlink delay requirement for a service data flow;
   generating or updating an uplink delay budget and/or a downlink delay budget of a first tunnel; and
   generating or updating a delay budget of a second tunnel and/or a delay budget of a third tunnel;
      where
   the first tunnel is usable for transmitting uplink data and/or downlink data of the service;
   the second tunnel is used for transmitting the uplink data of the service; and
   the third tunnel is used for transmitting the downlink data of the service.

In an optional embodiment of this application, the result of the delay monitoring includes at least one of the following:
a result of uplink delay monitoring;
a result of downlink delay monitoring; and
a result of round-trip delay monitoring.

In an optional embodiment of this application, the fifth information further includes a round-trip delay budget of a third object.

The third object includes at least one of the following: a service data flow, a tunnel group, and the first tunnel.

In an optional embodiment of this application, when the fourth processing module 1202 is configured to perform a fifth operation according to the fifth information, the fourth processing module 1202 is specifically configured to:
perform, for the fifth communication device, a fifth operation according to the fifth information in a case that a fourth condition is met; where
the fourth condition includes at least one of the following:
   a result of uplink delay monitoring exceeds at least one of the following: a current uplink delay requirement for the service data flow, an uplink delay budget of the first tunnel, and a delay budget of the second tunnel;
   a result of downlink delay monitoring exceeds at least one of the following:
      a current downlink delay requirement for the service data flow, a current downlink delay requirement for the service data flow, a downlink delay budget of the first tunnel, and
      a delay budget of the third tunnel;
   a result of round-trip delay monitoring does not exceed a round-trip delay requirement of a third object; and
   a sum of the result of uplink delay monitoring and the result of downlink delay monitoring does not exceed the round-trip delay requirement of the third object.

In an optional embodiment of this application, the communication device 1300 further includes:
a seventh processing module, configured to perform at least one of the following based on the first information: determining a delay monitoring requirement, and sending the delay monitoring requirement.

The delay monitoring requirement includes at least one of the following: a delay monitoring requirement for the first tunnel, a delay monitoring requirement for the second tunnel, a delay monitoring requirement for the third tunnel, and a delay monitoring requirement for the data flow of the service; and/or the delay monitoring requirement includes at least one of the following:
description information of a tunnel that requires delay monitoring;
description information of a service that requires delay monitoring;
an uplink delay monitoring requirement;
a downlink delay monitoring requirement; and
a round-trip delay monitoring requirement.

It should be noted that the corresponding method is applied to the foregoing device, and the implementations of the embodiments of the QoS control method are applicable to the corresponding device, with the same technical effects achieved.

As shown in FIG. 14, an embodiment of this application further provides a communication device 1400, including a processor 1402, a memory 1401, and a computer program 14011 stored in the memory 1401 and capable of running on the processor 1402. When the computer program 14011 is executed by a processor, the steps of the QoS control method applied to the first communication device are implemented; or the steps of the QoS control method applied to the second communication device are implemented; or the steps of the QoS control method applied to the third communication device are implemented; or the steps of the QoS control method applied to the fourth communication device are implemented; or the steps of the QoS control method applied to the fifth communication device are implemented, with the same technical effects achieved. To avoid repetition, details are not described herein again.

An embodiment of this application further provides a computer-readable storage medium, where a computer program is stored in the computer-readable storage medium. When the computer program is executed by a processor, the processes of any one of the foregoing QoS control method embodiments can be implemented, with the same technical effects achieved. To avoid repetition, details are not described herein again. The computer-readable storage medium is, for example, a read-only memory (Read-Only Memory, ROM for short), a random access memory (Random Access Memory, RAM for short), a magnetic disk, or an optical disc.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A QoS control method, comprising:
obtaining, by a first communication device, first information, wherein the first information comprises at least one of the following: a round-trip delay requirement for a service, an uplink delay requirement for a service, a downlink delay requirement for a service, a first delay requirement for a service, and first indication information of a service; and
performing, by the first communication device, a first operation according to the first information, wherein the first operation comprises at least one of the following:
mapping a first tunnel for a data flow of the service, wherein the first tunnel is usable for transmitting uplink data and/or downlink data of the service;
determining QoS requirement related information of the first tunnel;
determining first related information of a QoS requirement for the service data flow;
mapping a second tunnel and/or mapping a third tunnel for the data flow of the service, wherein the second tunnel is used for transmitting uplink data of the service and the third tunnel is used for transmitting downlink data of the service;
determining QoS requirement related information of the second tunnel and/or determining QoS requirement related information of the third tunnel;
determining second related information of a QoS requirement for the service data flow, and/or determining third related information of a QoS requirement for the service data flow;
determining a delay monitoring requirement, comprising at least one of the following: determining a delay monitoring requirement of the first tunnel, determining a delay monitoring requirement of the second tunnel, determining a delay monitoring requirement of the third tunnel, and determining a delay monitoring requirement of the data flow of the service;
determining an uplink delay requirement for the service and a downlink delay requirement for the service according to a round-trip delay requirement for the service, wherein a sum of the uplink delay requirement and the downlink delay requirement for the service does not exceed the round-trip delay requirement for the service;
using a value of half of the round-trip delay requirement for the service as the first delay requirement for the service;
performing mapping of a first QoS identifier based on the value of half of the round-trip delay requirement for the service;
using a value twice the first delay requirement for the service as the round-trip delay requirement for the service;
determining first indication information of the service; and
sending second information, wherein the second information comprises at least one of the following: the QoS requirement related information of the first tunnel, the first related information of the QoS requirement for the service data flow, the QoS requirement related information of the second tunnel, the second related information of the QoS requirement for the service data flow, the QoS requirement related information of the third tunnel, the third related information of the QoS requirement for the service data flow, a delay monitoring requirement, and a related requirement for the service; wherein
the related requirement for the service comprises at least one of the following:
description information of the service, the round-trip delay requirement for the service,
the uplink delay requirement for the service, the downlink delay requirement for the service, the first delay requirement for the service, and the first indication information of the service.

2. The method according to claim 1, wherein
the QoS requirement related information of the first tunnel comprises at least one of the following: identification information of the first tunnel, a first QoS requirement, and a related requirement for the service; and
the first related information of the QoS requirement for the service data flow comprises at least one of the following: description information of the data flow of the service, the first QoS requirement, a second QoS requirement, a third QoS requirement, and the related requirement for the service;
and/or
the QoS requirement related information of the second tunnel comprises at least one of the following: identification information of the second tunnel, a data direction in the tunnel, fourth indication information, a second QoS requirement, a related requirement for the service, and identification information of an associated third tunnel; wherein the fourth indication information is used for indicating that the tunnel is used only for transmitting uplink data;
and/or
the second related information of the QoS requirement for the service data flow comprises at least one of the following: the description information of the data flow of the service, the data direction of the service, the second QoS requirement, and the related requirement for the service;
and/or
the QoS requirement related information of the third tunnel comprises at least one of the following: identification information of the third tunnel, a data direction in the tunnel, fifth indication information, a third QoS requirement, a related requirement for the service, and identification information of the associated second tunnel; wherein the fifth indication information is used for indicating that the tunnel is used only for transmitting downlink data; and/or
the third related information of the QoS requirement for the service data flow comprises at least one of the following: the description information of the data flow of the service, the data direction of the service, the third QoS requirement, and the related requirement for the service.

3. The method according to claim 1 or 2, wherein
the first QoS requirement comprises at least one of the following:
a first QoS identifier;
a first delay budget;
an uplink QoS requirement and a downlink QoS requirement;
a round-trip QoS requirement; and
second indication information; wherein
the second indication information is used for indicating at least one of the following:
a round-trip delay overhead of a first object does not exceed twice the first delay requirement;
the round-trip delay overhead of the first object does not exceed the round-trip delay requirement for the service;
the first object requires round-trip delay guarantee;
an uplink delay overhead of the first object is allowed to exceed an uplink delay requirement of the first object or a first delay requirement of the first object;
a downlink delay overhead of the first object is allowed to exceed a downlink delay requirement of the first object or the first delay requirement of the first object;
a sum of the uplink delay overhead of the first object and the downlink delay overhead of the first object does not exceed a round-trip delay requirement of the first object; and
the sum of the uplink delay overhead of the first object and the downlink delay overhead of the first object does not exceed a value twice the first delay requirement of the first object; wherein
the first object comprises at least one of the following: the first tunnel and the data flow of the service.

4. The method according to claim 1, wherein the first delay requirement comprises a time budget required for data to pass between a terminal and an anchor gateway;
and/or
the first indication information of the service is used to indicate at least one of the following:
a round-trip delay overhead of the service does not exceed twice the first delay requirement;
the round-trip delay overhead of the service does not exceed the round-trip delay requirement for the service;
the service requires round-trip delay guarantee;
the uplink delay requirement for the service is different from the downlink delay requirement;
an uplink delay overhead of the service is allowed to exceed the uplink delay requirement for the service or the first delay requirement for the service;
a downlink delay overhead of the service is allowed to exceed the downlink delay requirement or the first delay requirement for the service;
a sum of the uplink delay overhead and the downlink delay overhead of the service does not exceed the round-trip delay requirement for the service; and
the sum of the uplink delay overhead and the downlink delay overhead of the service does not exceed a value twice the first delay requirement for the service.

5. The method according to claim 2, wherein the identification information of the first tunnel comprises at least one of the following: a tunnel identifier of the first tunnel, a first QoS identifier of the first tunnel, an uplink QoS identifier of the first tunnel, and a downlink QoS identifier of the first tunnel.

6. The method according to claim 3, wherein the first QoS identifier is able to be mapped to at least one of the following: uplink values and/or downlink values of a group of QoS parameters, values of a group of uplink QoS parameters, downlink values of a group of downlink QoS parameters, and values of a group of QoS parameters.

7. The method according to claim 3, wherein
the uplink QoS requirement comprises at least one of the following: an uplink QoS identifier and an uplink delay budget;
and/or
the downlink QoS requirement comprises at least one of the following: a downlink QoS identifier and a downlink delay budget.

8. The method according to claim 2, wherein the round-trip QoS requirement comprises:
a round trip QoS identifier, a round-trip delay budget, and a round trip error rate.

9. The method according to claim 1, wherein
the performing at least one of the following: mapping a first tunnel for a data flow of the service, determining QoS requirement related information of the first tunnel, and determining first related information of a QoS requirement for the service data flow comprises: in a case that a first condition is met, performing at least one of the following: mapping the first tunnel for the data flow of the service, determining the QoS requirement related information of the first tunnel, and determining the first related information of the QoS requirement for the service data flow; wherein
the first condition comprises at least one of the following:
the service requires round-trip delay guarantee;
it is determined that the uplink delay requirement for the service is the same as the downlink delay requirement for the service;
it is determined that an uplink value of a QoS parameter of the service is the same as a value of a downlink QoS parameter;
it is determined that a QoS identifier mapped for uplink data of the service is the same as a QoS identifier mapped for downlink data of the service;
it is determined to use a value of half of the round-trip delay requirement for the service as the first delay requirement for the service or the first tunnel; and
it is determined to perform mapping of a first QoS identifier based on the value of half of the round-trip delay requirement for the service.

10. The method according to claim 1, wherein
the performing at least one of the following: mapping a second tunnel and/or a third tunnel for the data flow of the service, determining QoS requirement related information of the second tunnel and/or determining QoS requirement related information of the third tunnel, and determining second related information of a QoS requirement for the service data flow and/or determining third related information of a QoS requirement for the service data flow comprises:
in a case that a second condition is met, performing at least one of the following:
mapping the second tunnel and/or the third tunnel for the data flow of the service, determining the QoS requirement related information of the second tunnel and/or the QoS requirement related information of the third tunnel, and determining the second related information of the QoS requirement for the service data flow and/or determining the third related information of the QoS requirement for the service data flow; wherein
the second condition comprises at least one of the following:
the service requires round-trip delay guarantee;
it is determined that the uplink delay requirement for the service is different from the downlink delay requirement for the service;
it is determined that an uplink value of a QoS parameter of the service is different from a value of a downlink QoS parameter; and
it is determined that a QoS identifier mapped for uplink data of the service is different from a QoS identifier mapped for downlink data of the service.

11. The method according to claim 2, wherein the operation of determining the first QoS requirement comprises at least one of the following:
performing at least one of the following according to the round-trip delay requirement for the service: splitting the round-trip delay requirement for the service to map to an uplink requirement and a downlink requirement in the first QoS requirement; splitting the round-trip delay requirement for the service into an uplink delay requirement for the service and a downlink delay requirement for the service; mapping the uplink delay requirement for the service obtained through splitting to the uplink requirement in the first QoS requirement; mapping the downlink delay requirement for the service obtained through splitting to the downlink requirement in the first QoS requirement; and splitting the round-trip delay requirement for the service to map to a first QoS identifier in the first QoS requirement;
performing at least one of the following based on a value of half of the round-trip delay requirement for the service: mapping the value of half of the round-trip delay requirement for the service to a first delay budget in the first QoS requirement, and mapping the value of half of the round-trip delay requirement for the service to the first QoS identifier in the first QoS requirement;
performing at least one of the following based on a value twice the first delay requirement for the service: using the value twice the first delay requirement for the service as a round-trip delay budget of the service, and mapping the value twice the first delay requirement for the service to a round-trip QoS requirement or the round-trip delay budget in the first QoS requirement;
performing at least one of the following according to the uplink delay requirement for the service: mapping the uplink delay requirement for the service to the uplink requirement in the first QoS requirement, and mapping the uplink delay requirement for the service to the first QoS identifier in the first QoS requirement; and
performing at least one of the following according to the downlink delay requirement for the service: mapping the downlink delay requirement for the service to the downlink requirement in the first QoS requirement, and mapping a downlink delay budget of the service to the first QoS identifier in the first QoS requirement;
wherein
the uplink requirement comprises at least one of the following: an uplink QoS requirement, an uplink delay budget, and an uplink QoS identifier; and
the downlink requirement comprises at least one of the following: a downlink QoS requirement, a downlink delay budget, and a downlink QoS identifier.

12. The method according to claim 2, wherein
a sum of an uplink delay budget in the first QoS requirement and a downlink delay budget in the first QoS requirement does not exceed the round-trip delay requirement for the service.

13. The method according to claim 2, wherein
the operation of determining the second QoS requirement comprises at least one of the following:
performing at least one of the following according to the round-trip delay requirement for the service: splitting the round-trip delay requirement for the service into an uplink delay requirement and a downlink delay requirement for the service, mapping a delay budget in the second QoS requirement according to the uplink delay requirement obtained through splitting, and mapping a QoS identifier in the second QoS requirement according to the uplink delay requirement obtained through splitting; and
performing at least one of the following according to the uplink delay requirement for the service: mapping the delay budget in the second QoS requirement according to the uplink delay requirement for the service, and mapping the QoS identifier in the second QoS requirement according to the uplink delay requirement for the service;
and/or
the operation of determining the third QoS requirement comprises at least one of the following:
performing at least one of the following according to the round-trip delay requirement for the service: splitting the round-trip delay requirement for the service into an uplink delay requirement and a downlink delay requirement for the service, mapping a delay budget in the third QoS requirement according to the downlink delay requirement for the service obtained through splitting, and mapping a QoS identifier in the third QoS requirement according to the downlink delay requirement for the service obtained through splitting; and
performing at least one of the following according to the downlink delay requirement for the service: mapping the delay budget in the third QoS requirement according to the downlink delay requirement for the service, and mapping the QoS identifier in the third QoS requirement according to the downlink delay requirement for the service.

14. The method according to claim 11 or 13, wherein
a sum of the uplink delay requirement and the downlink delay requirement for the service does not exceed at least one of the following: the round-trip delay requirement for the service, and a value twice the first delay requirement for the service.

15. The method according to claim 1, before the step of performing, by the first communication device, a first operation according to the first information, further comprising:
obtaining, by the first communication device, third information, wherein the third information is used for indicating a result of delay monitoring; and
the performing, by the first communication device, a first operation according to the first information comprises:
performing, by the first communication device, the first operation according to the first information and the third information.

16. The method according to claim 15, wherein the result of delay monitoring comprises at least one of the following:
a result of uplink delay monitoring;
a result of downlink delay monitoring; and
a result of round-trip delay monitoring.

17. The method according to claim 15, before the obtaining, by the first communication device, third information, further comprising:
performing, by the first communication device, at least one of the following based on the first information:
determining a delay monitoring requirement; and
sending the delay monitoring requirement; wherein
the delay monitoring requirement comprises at least one of the following: a delay monitoring requirement for the first tunnel, a delay monitoring requirement for the second tunnel, a delay monitoring requirement for the third tunnel, and a delay monitoring requirement for the data flow of the service; and/or the delay monitoring requirement comprises at least one of the following:
description information of a tunnel that requires delay monitoring;
description information of a service that requires delay monitoring;
an uplink delay monitoring requirement;
a downlink delay monitoring requirement; and
a round-trip delay monitoring requirement.

18. A QoS control method, comprising:
sending, by a second communication device, first information; wherein
the first information comprises at least one of the following: a round-trip delay requirement for a service, an uplink delay requirement for a service, a downlink delay requirement for a service, a first delay requirement for a service, and first indication information of a service.

19. The method according to claim 18, wherein the sending, by a second communication device, first information comprises:
sending, by the second communication device, the first information in a case that a third condition is satisfied; wherein
the third condition comprises at least one of the following:
the service requires round-trip delay guarantee;
the uplink delay requirement for the service is different from the downlink delay requirement for the service; and
a QoS guarantee requirement for the service is received or generated.

20. The method according to claim 18, wherein
the round-trip delay requirement for the service is used for requesting to perform at least one of the following for the service according to the round-trip delay requirement for the service: round-trip delay guarantee, uplink delay guarantee, and downlink delay guarantee;
the uplink delay requirement for the service is used for requesting to guarantee an uplink delay of the service according to the uplink delay requirement for the service;
the downlink delay requirement for the service is used for requesting to guarantee a downlink delay of the service according to the downlink delay requirement for the service;
and/or
the first delay requirement for the service and/or the first indication information of the service is used to indicate at least one of the following:
a round-trip delay overhead of the service does not exceed twice the first delay requirement;
the round-trip delay overhead of the service does not exceed the round-trip delay requirement for the service;
the service requires round-trip delay guarantee;
the uplink delay requirement for the service is different from the downlink delay requirement;
an uplink delay overhead of the service is allowed to exceed the uplink delay requirement for the service or the first delay requirement for the service;
a downlink delay overhead of the service is allowed to exceed the downlink delay requirement or the first delay requirement for the service;
a sum of the uplink delay overhead and the downlink delay overhead of the service does not exceed the round-trip delay requirement for the service; and
the sum of the uplink delay overhead and the downlink delay overhead of the service does not exceed a value twice the first delay requirement for the service.

21. A QoS control method, comprising:
obtaining, by a third communication device, second information, wherein the second information comprises at least one of the following: QoS requirement related information of a first tunnel, first related information of a QoS requirement for a service data flow, QoS requirement related information of a second tunnel, second related information of the QoS requirement for the service data flow, QoS requirement related information of a third tunnel, third related information of the QoS requirement for the service data flow, a delay monitoring requirement, and a related requirement for the service; and
performing, by the third communication device, a second operation according to the second information, wherein the second operation comprises at least one of the following:
mapping the first tunnel for the data flow of the service, wherein the first tunnel is usable for transmitting uplink data and/or downlink data of the service;
determining QoS configuration related information of the first tunnel;
mapping the second tunnel and/or the third tunnel for the data flow of the service, wherein the second tunnel is used for transmitting uplink data of the service and the third tunnel is used for transmitting downlink data of the service;
determining QoS configuration related information of the second tunnel;
determining QoS configuration related information of the third tunnel;
determining a delay monitoring configuration, comprising at least one of the following: determining a delay monitoring configuration of the first tunnel, determining a delay monitoring configuration of the second tunnel, determining a delay monitoring configuration of the third tunnel, and determining a delay monitoring configuration of the data flow of the service;
determining a QoS configuration of a second object; and
sending fourth information, wherein the fourth information comprises at least one of the following: QoS configuration related information of the first tunnel, QoS configuration related information of the second tunnel, QoS configuration related information of the third tunnel, the delay monitoring configuration, and the QoS configuration of the second object; wherein
the QoS configuration of the second object comprises at least one of the following:
a round-trip delay configuration of the second object, a first delay configuration of the second object, and second indication information of the second object.

22. The method according to claim 21, wherein
the QoS configuration related information of the first tunnel comprises at least one of the following: identification information of the first tunnel, a first QoS configuration, and a related requirement for the service;
and/or
the QoS configuration related information of the second tunnel comprises at least one of the following: identification information of the second tunnel, a data direction in the tunnel, fourth indication information, a second QoS configuration, the QoS configuration of the second object, and identification information of an associated third tunnel; wherein the fourth indication information is used for indicating that the tunnel is used only for transmitting uplink data;
and/or
the QoS configuration related information of the third tunnel comprises at least one of the following: identification information of the third tunnel, a data direction in the tunnel, fifth indication information, a third QoS configuration, the QoS configuration of the second object, and identification information of an associated second tunnel; wherein the fifth indication information is used for indicating that the tunnel is used only for transmitting downlink data.

23. The method according to claim 21 or 22, wherein the operation of determining a QoS configuration of a second object comprises at least one of the following:
mapping a first delay budget in the QoS configuration of the second object based on a value of half of a round-trip delay requirement for the service;
mapping a first QoS identifier in the QoS configuration of the second object based on the value of half of a round-trip delay requirement for the service;
mapping a round-trip delay budget in the QoS configuration of the second object based on a value twice a first delay requirement for the service;
mapping second indication information in the QoS configuration of the second object according to second indication information of the service;
mapping a first delay budget in the QoS configuration of the second object based on the first delay requirement for the service; and
using a sum of a delay budget in the second QoS configuration and a delay budget in the third QoS configuration as the round-trip delay budget in the QoS configuration of the second object; wherein
the second object comprises at least one of the following: a tunnel group, and the data flow of the service.

24. The method according to claim 22, wherein the first QoS configuration comprises at least one of the following:
a first QoS identifier;
a first delay budget;
an uplink QoS configuration and a downlink QoS configuration;
a round-trip QoS configuration; and
second indication information; wherein
the second indication information is used for indicating at least one of the following:
a round-trip delay overhead of a first object does not exceed twice a first delay requirement;
the round-trip delay overhead of the first object does not exceed the round-trip delay requirement for the service;
the first object requires round-trip delay guarantee;
an uplink delay overhead of the first object is allowed to exceed an uplink delay requirement of the first object or a first delay requirement of the first object;
a downlink delay overhead of the first object is allowed to exceed a downlink delay requirement of the first object or the first delay requirement of the first object;
a sum of the uplink delay overhead of the first object and the downlink delay overhead of the first object does not exceed a round-trip delay requirement of the first object; and
the sum of the uplink delay overhead of the first object and the downlink delay overhead of the first object does not exceed a value twice the first delay requirement of the first object; wherein
the first object comprises at least one of the following: the first tunnel.

25. The method according to claim 24, wherein the uplink QoS configuration comprises at least one of the following:
a downlink QoS identifier and an uplink delay budget;
and/or
the downlink QoS configuration comprises at least one of the following:
a downlink QoS identifier and a downlink delay budget.

26. The method according to claim 24, wherein
the QoS requirement related information of the first tunnel comprises at least one of the following: identification information of the first tunnel, a first QoS requirement, and a related requirement for the service; and
the first related information of the QoS requirement for the service data flow comprises at least one of the following: description information of the data flow of the service, the first QoS requirement, a second QoS requirement, a third QoS requirement, and the related requirement for the service;
and/or
the QoS requirement related information of the second tunnel comprises at least one of the following: identification information of the second tunnel, a data direction in the tunnel, fourth indication information, a second QoS requirement, a related requirement for the service, and identification information of an associated third tunnel; wherein the fourth indication information is used for indicating that the tunnel is used only for transmitting uplink data;
and/or
the second related information of the QoS requirement for the service data flow comprises at least one of the following: the description information of the data flow of the service, the data direction of the service, the second QoS requirement, and the related requirement for the service;
and/or
the QoS requirement related information of the third tunnel comprises at least one of the following: identification information of the third tunnel, a data direction in the tunnel, fifth indication information, a third QoS requirement, a related requirement for the service, and identification information of the associated second tunnel; wherein the fifth indication information is used for indicating that the tunnel is used only for transmitting downlink data; and
the third related information of the QoS requirement for the service data flow comprises at least one of the following: the description information of the data flow of the service, the data direction of the service, the third QoS requirement, and the related requirement for the service.

27. The method according to claim 26, wherein the operation of determining the first QoS configuration comprises at least one of the following:
determining the first QoS configuration according to the first QoS requirement;
performing at least one of the following according to the round-trip delay requirement for the service: splitting the round-trip delay requirement for the service to map to an uplink configuration and a downlink configuration in the first QoS configuration; splitting the round-trip delay requirement for the service into an uplink delay requirement for the service and a downlink delay requirement for the service; mapping the uplink delay requirement for the service obtained through splitting to the uplink configuration in the first QoS configuration; mapping the downlink delay requirement for the service obtained through splitting to the downlink configuration in the first QoS configuration; and splitting the round-trip delay requirement for the service to map to a first QoS identifier in the first QoS configuration;
performing at least one of the following based on a value of half of the round-trip delay requirement for the service: mapping the value of half of the round-trip delay requirement for the service to a first delay budget in the first QoS configuration, and mapping the value of half of the round-trip delay requirement for the service to the first QoS identifier in the first QoS configuration;
performing at least one of the following based on a value twice a first delay requirement for the service: using the value twice the first delay requirement for the service as a round-trip delay budget of the service, and mapping the value twice the first delay requirement for the service to a round-trip QoS configuration or the round-trip delay budget in the first QoS configuration;
performing at least one of the following according to the uplink delay requirement for the service: mapping the uplink delay requirement for the service to the uplink configuration in the first QoS configuration, and mapping the uplink delay requirement for the service to the first QoS identifier in the first QoS configuration; and
performing at least one of the following according to the downlink delay requirement for the service: mapping the downlink delay requirement for the service to the downlink configuration in the first QoS configuration, and mapping a downlink delay budget of the service to the first QoS identifier in the first QoS configuration;
wherein
the uplink configuration comprises at least one of the following: an uplink QoS configuration, an uplink delay budget, and an uplink QoS identifier; and
the downlink configuration comprises at least one of the following: a downlink QoS configuration, a downlink delay budget, and a downlink QoS identifier.

28. The method according to claim 24, wherein a sum of an uplink delay budget in the first QoS configuration and a downlink delay budget in the first QoS configuration does not exceed at least one of the following: the round-trip delay requirement for the service, and a value twice the first delay requirement for the service.

29. The method according to claim 26, wherein
the operation of determining the second QoS configuration comprises at least one of the following:
determining the second QoS configuration according to the second QoS requirement;
performing at least one of the following according to the round-trip delay requirement for the service: splitting the round-trip delay requirement for the service into an uplink delay requirement and a downlink delay requirement for the service, mapping a delay budget in the second QoS configuration according to the uplink delay requirement obtained through splitting, and mapping a QoS identifier in the second QoS configuration according to the uplink delay requirement obtained through splitting; and
performing at least one of the following according to the uplink delay requirement for the service: mapping the delay budget in the second QoS configuration according to the uplink delay requirement for the service, and mapping the QoS identifier in the second QoS configuration according to the uplink delay requirement for the service;
and/or
the operation of determining the third QoS configuration comprises at least one of the following:
determining the third QoS configuration according to the third QoS requirement;
performing at least one of the following according to the round-trip delay requirement for the service: splitting the round-trip delay requirement for the service into an uplink delay requirement and a downlink delay requirement for the service, mapping a delay budget in the third QoS configuration according to the downlink delay requirement for the service obtained through splitting, and mapping a QoS identifier in the third QoS configuration according to the downlink delay requirement for the service obtained through splitting; and
performing at least one of the following according to the downlink delay requirement for the service: mapping the delay budget in the third QoS configuration according to the downlink delay requirement for the service, and mapping the QoS identifier in the third QoS configuration according to the downlink delay requirement for the service.

30. The method according to claim 21, further comprising:
determining, by the third communication device, a delay monitoring requirement, wherein the delay monitoring requirement comprises at least one of the following:
description information of a tunnel that requires delay monitoring, description information of a service that requires delay monitoring, an uplink delay monitoring requirement, a downlink delay monitoring requirement, and a round-trip delay monitoring requirement; and
performing, by the third communication device, at least one of the following according to the delay monitoring requirement:
determining a delay monitoring configuration; and
sending the delay monitoring configuration; wherein
the delay monitoring configuration comprises at least one of the following: a delay monitoring configuration of the first tunnel, a delay monitoring configuration of the second tunnel, a delay monitoring configuration of the third tunnel, and a delay monitoring configuration of the data flow of the service.

31. A QoS control method, comprising:
obtaining, by a fourth communication device, second information or fourth information; and
performing, by the fourth communication device, a fourth operation according to the second information or the fourth information, wherein the fourth operation comprises at least one of the following:
a related operation of a first tunnel; and
a related operation of a second tunnel and/or a third tunnel;
wherein
the second information comprises at least one of the following: QoS requirement related information of the first tunnel, first related information of a QoS requirement for a service data flow, QoS requirement related information of the second tunnel, second related information of the QoS requirement for the service data flow, QoS requirement related information of the third tunnel, third related information of the QoS requirement for the service data flow, a delay monitoring requirement, and a related requirement for the service; and
the fourth information comprises at least one of the following: QoS configuration related information of the first tunnel, QoS configuration related information of the second tunnel, QoS configuration related information of the third tunnel, a delay monitoring configuration, and a QoS configuration of a second object; wherein
the related operation of the first tunnel comprises at least one of the following:
guaranteeing that a round-trip delay overhead of data of the first tunnel does not exceed twice a first delay budget or does not exceed a round-trip delay budget;
in a case that an uplink delay overhead exceeds an uplink delay budget or the first delay budget, guaranteeing that a sum of an uplink delay overhead and a downlink delay overhead of the first tunnel does not exceed a round-trip delay budget of the first tunnel;
in a case that the downlink delay overhead exceeds a downlink delay budget or the first delay budget, guaranteeing that the sum of the uplink delay overhead and the downlink delay overhead of the first tunnel does not exceed the round-trip delay budget of the first tunnel;
guaranteeing an uplink delay overhead based on an uplink delay budget of the first tunnel, wherein the uplink delay budget is at least one of the following: an uplink delay configuration in a first QoS configuration, an uplink delay budget mapped by an uplink QoS identifier, an uplink delay budget mapped by a first QoS identifier, a value obtained through the round-trip delay budget minus a downlink delay average overhead, and a value obtained through twice the first delay budget minus the downlink delay average overhead;
guaranteeing a downlink delay overhead based on a downlink delay budget of the first tunnel, wherein the downlink delay budget is at least one of the following: a downlink delay configuration in the first QoS configuration, an uplink delay budget mapped by a downlink QoS identifier, a downlink delay budget mapped by a first QoS identifier, a value obtained through the round-trip delay budget minus an uplink delay average overhead, and a value obtained through twice the first delay budget minus the uplink delay average overhead;
performing resource allocation and data scheduling according to the first QoS configuration; and
mapping the data flow of the service to a first data tunnel; wherein
the related operation of the second tunnel and/or the third tunnel comprises at least one of the following:
guaranteeing that a sum of a delay overhead of the second tunnel and a delay overhead of the third tunnel does not exceed twice a first delay budget of the second object, or does not exceed a round-trip delay budget of the second object;
in a case that an overhead of the second tunnel exceeds a delay budget of the second tunnel, guaranteeing that the sum of the delay overhead of the second tunnel and the delay overhead of the third tunnel does not exceed the round-trip delay budget of the second object;
in a case that a delay overhead of the third tunnel exceeds a delay budget of the third tunnel, guaranteeing that a sum of the uplink delay overhead of the first tunnel and the delay overhead of the third tunnel does not exceed the round-trip delay budget of the second object;
performing resource allocation and data scheduling according to the first QoS configuration;
mapping uplink data of the service to a second data tunnel; and
mapping downlink data of the service to a third data tunnel.

32. The method according to claim 31, wherein the first QoS configuration comprises at least one of the following:
a first QoS identifier;
a first delay budget;
an uplink QoS configuration and a downlink QoS configuration;
a round-trip QoS configuration; and
second indication information; wherein
the second indication information is used for indicating at least one of the following:
a round-trip delay overhead of a first object does not exceed twice a first delay requirement;
the round-trip delay overhead of the first object does not exceed a round-trip delay requirement for the service;
the first object requires round-trip delay guarantee;
an uplink delay overhead of the first object is allowed to exceed an uplink delay requirement of the first object or a first delay requirement of the first object;
a downlink delay overhead of the first object is allowed to exceed a downlink delay requirement of the first object or the first delay requirement of the first object;
a sum of the uplink delay overhead of the first object and the downlink delay overhead of the first object does not exceed a round-trip delay requirement of the first object; and
the sum of the uplink delay overhead of the first object and the downlink delay overhead of the first object does not exceed a value twice the first delay requirement of the first object; wherein
the first object comprises at least one of the following: the first tunnel.

33. The method according to claim 32, wherein the uplink QoS configuration comprises at least one of the following:
a downlink QoS identifier and an uplink delay budget;
and/or
the downlink QoS configuration comprises at least one of the following:
a downlink QoS identifier and a downlink delay budget.

34. The method according to claim 31, wherein the mapping the data flow of the service to the second data tunnel comprises: mapping the data flow of the service to the third data tunnel in a case that a fifth condition is met; wherein
the fifth condition comprises at least one of the following:
a value of a data direction in QoS related information of the second data tunnel is uplink;
the second data tunnel is used only for transmitting uplink data; and
a value of a data direction in QoS-related configuration information of the second data tunnel is uplink;
and/or
the mapping the data flow of the service to the first data tunnel comprises mapping the data flow of the service to the third data tunnel in a case that a sixth condition is met; wherein
the sixth condition comprises at least one of the following:
a value of a data direction in QoS related information of the third data tunnel is downlink;
the third data tunnel is used only for transmitting downlink data; and
a value of a data direction in QoS-related configuration information of the third data tunnel is downlink.

35. A QoS control method, comprising:
obtaining, by a fifth communication device, fifth information, wherein the fifth information comprises a result of delay monitoring; and
performing, by the fifth communication device, a fifth operation according to the fifth information, wherein the fifth operation comprises at least one of the following:
generating or updating an uplink delay requirement and/or a downlink delay requirement of a service data flow;
generating or updating an uplink delay budget and/or a downlink delay budget of a first tunnel; and
generating or updating a delay budget of a second tunnel and/or a delay budget of a third tunnel;
wherein
the first tunnel is usable for transmitting uplink data and/or downlink data of the service;
the second tunnel is used for transmitting the uplink data of the service; and
the third tunnel is used for transmitting the downlink data of the service.

36. The method according to claim 35, wherein the result of delay monitoring comprises at least one of the following:
a result of uplink delay monitoring;
a result of downlink delay monitoring; and
a result of round-trip delay monitoring.

37. The method according to claim 35, wherein the fifth information further comprises a round-trip delay budget of a third object; and
the third object comprises at least one of the following: a service data flow, a tunnel group, and the first tunnel.

38. The method according to claim 35, wherein the performing, by the fifth communication device, a fifth operation according to the fifth information comprises: performing the fifth operation according to the fifth information by the fifth communication device in a case that a fourth condition is met; wherein
the fourth condition comprises at least one of the following:
a result of uplink delay monitoring exceeds at least one of the following: a current uplink delay requirement for the service data flow, an uplink delay budget of the first tunnel, and a delay budget of the second tunnel;
a result of downlink delay monitoring exceeds at least one of the following: a current downlink delay requirement for the service data flow, a current downlink delay requirement for the service data flow, a downlink delay budget of the first tunnel, and a delay budget of the third tunnel;
a result of round-trip delay monitoring does not exceed a round-trip delay requirement of a third object; and
a sum of the result of uplink delay monitoring and the result of downlink delay monitoring does not exceed the round-trip delay requirement of the third object.

39. The method according to claim 35, before the obtaining, by the fifth communication device, third information, further comprising:
performing, by the fifth communication device, at least one of the following based on first information:
determining a delay monitoring requirement; and
sending the delay monitoring requirement; wherein
the delay monitoring requirement comprises at least one of the following: a delay monitoring requirement for the first tunnel, a delay monitoring requirement for the second tunnel, a delay monitoring requirement for the third tunnel, and a delay monitoring requirement for the data flow of the service; and/or the delay monitoring requirement comprises at least one of the following:
description information of a tunnel that requires delay monitoring;
description information of a service that requires delay monitoring;
an uplink delay monitoring requirement;
a downlink delay monitoring requirement; and
a round-trip delay monitoring requirement.

40. A communication device, wherein the communication device is a first communication device, comprising:
a first obtaining module, configured to obtain first information, wherein the first information comprises at least one of the following: a round-trip delay requirement for a service, an uplink delay requirement for a service, a downlink delay requirement for a service, a first delay requirement for a service, and first indication information of a service; and
a first processing module, configured to perform a first operation according to the first information, wherein the first operation comprises at least one of the following:
mapping the first tunnel for the data flow of the service, wherein the first tunnel is usable for transmitting uplink data and/or downlink data of the service;
determining QoS requirement related information of the first tunnel;
determining first related information of a QoS requirement for the service data flow;
mapping a second tunnel and/or mapping a third tunnel for the data flow of the service, wherein the second tunnel is used for transmitting uplink data of the service and the third tunnel is used for transmitting downlink data of the service;
determining QoS requirement related information of the second tunnel and/or determining QoS requirement related information of the third tunnel;
determining second related information of a QoS requirement for the service data flow, and/or determining third related information of a QoS requirement for the service data flow;
determining a delay monitoring requirement, comprising at least one of the following: determining a delay monitoring requirement of the first tunnel, determining a delay monitoring requirement of the second tunnel, determining a delay monitoring requirement of the third tunnel, and determining a delay monitoring requirement of the data flow of the service;
determining an uplink delay requirement for the service and a downlink delay requirement for the service according to a round-trip delay requirement for the service, wherein a sum of the uplink delay requirement and the downlink delay requirement for the service does not exceed the round-trip delay requirement for the service;
using a value of half of the round-trip delay requirement for the service as the first delay requirement for the service;
performing mapping of a first QoS identifier based on the value of half of the round-trip delay requirement for the service;
using a value twice the first delay requirement for the service as the round-trip delay requirement for the service;
determining first indication information of the service; and
sending second information, wherein the second information comprises at least one of the following: the QoS requirement related information of the first tunnel, the first related information of the QoS requirement for the service data flow, the QoS requirement related information of the second tunnel, the second related information of the QoS requirement for the service data flow, the QoS requirement related information of the third tunnel, the third related information of the QoS requirement for the service data flow, a delay monitoring requirement, and a related requirement for the service; wherein
the related requirement for the service comprises at least one of the following:
description information of the service, the round-trip delay requirement for the service,
the uplink delay requirement for the service, the downlink delay requirement for the service, the first delay requirement for the service, and the first indication information of the service.

41. A communication device, wherein the communication device is a second communication device, comprising:
a sending module, configured to send first information; wherein
the first information comprises at least one of the following: a round-trip delay requirement for a service, an uplink delay requirement for a service, a downlink delay requirement for a service, a first delay requirement for a service, and first indication information of a service.

42. A communication device, wherein the communication device is a third communication device, comprising:
a second obtaining module, configured to obtain second information, wherein the second information comprises at least one of the following: QoS requirement related information of a first tunnel, first related information of a QoS requirement for a service data flow, QoS requirement related information of a second tunnel, second related information of the QoS requirement for the service data flow, QoS requirement related information of a third tunnel, third related information of the QoS requirement for the service data flow, a delay monitoring requirement, and a related requirement for the service; and
a second processing module, configured to perform a second operation according to the second information, wherein the second operation comprises at least one of the following:
mapping the first tunnel for the data flow of the service, wherein the first tunnel is usable for transmitting uplink data and/or downlink data of the service;
determining QoS configuration related information of the first tunnel;
mapping the second tunnel and/or the third tunnel for the data flow of the service, wherein the second tunnel is used for transmitting uplink data of the service and the third tunnel is used for transmitting downlink data of the service;
determining QoS configuration related information of the second tunnel;
determining QoS configuration related information of the third tunnel;
determining a delay monitoring configuration, comprising at least one of the following: determining a delay monitoring configuration of the first tunnel, determining a delay monitoring configuration of the second tunnel, determining a delay monitoring configuration of the third tunnel, and determining a delay monitoring configuration of the data flow of the service;
determining a QoS configuration of a second object; and
sending fourth information, wherein the fourth information comprises at least one of the following: QoS configuration related information of the first tunnel, QoS configuration related information of the second tunnel, QoS configuration related information of the third tunnel, the delay monitoring configuration, and the QoS configuration of the second object; wherein
the QoS configuration of the second object comprises at least one of the following: a round-trip delay configuration of the second object, a first delay configuration of the second object, and second indication information of the second object.

43. A communication device, wherein the communication device is a fourth communication device, comprising:
a third obtaining module, configured to obtain second information or fourth information; and
a third processing module, configured to perform a fourth operation according to the fourth information, wherein the fourth operation comprises at least one of the following:
a related operation of a first tunnel; and
a related operation of a second tunnel and/or a third tunnel;
the second information comprises at least one of the following: QoS requirement related information of the first tunnel, first related information of a QoS requirement for a service data flow, QoS requirement related information of the second tunnel, second related information of the QoS requirement for the service data flow, QoS requirement related information of the third tunnel, third related information of the QoS requirement for the service data flow, a delay monitoring requirement, and a related requirement for the service; and
the fourth information comprises at least one of the following: QoS configuration related information of the first tunnel, QoS configuration related information of the second tunnel, QoS configuration related information of the third tunnel, a delay monitoring configuration, and a QoS configuration of a second object; wherein
the related operation of the first tunnel comprises at least one of the following:
guaranteeing that a round-trip delay overhead of data of the first tunnel does not exceed twice a first delay budget or does not exceed a round-trip delay budget;
in a case that an uplink delay overhead exceeds an uplink delay budget or the first delay budget, guaranteeing that a sum of an uplink delay overhead and a downlink delay overhead of the first tunnel does not exceed a round-trip delay budget of the first tunnel;
in a case that the downlink delay overhead exceeds a downlink delay budget or the first delay budget, guaranteeing that the sum of the uplink delay overhead and the downlink delay overhead of the first tunnel does not exceed the round-trip delay budget of the first tunnel;
guaranteeing an uplink delay overhead based on an uplink delay budget of the first tunnel, wherein the uplink delay budget is at least one of the following: an uplink delay configuration in a first QoS configuration, an uplink delay budget mapped by an uplink QoS identifier, an uplink delay budget mapped by a first QoS identifier, a value obtained through the round-trip delay budget minus a downlink delay average overhead, and a value obtained through twice the first delay budget minus the downlink delay average overhead;
guaranteeing a downlink delay overhead based on a downlink delay budget of the first tunnel, wherein the downlink delay budget is at least one of the following: a downlink delay configuration in the first QoS configuration, an uplink delay budget mapped by a downlink QoS identifier, a downlink delay budget mapped by a first QoS identifier, a value obtained through the round-trip delay budget minus an uplink delay average overhead, and a value obtained through twice the first delay budget minus the uplink delay average overhead;
performing resource allocation and data scheduling according to the first QoS configuration; and
mapping the data flow of the service to a first data tunnel; wherein
the related operation of the second tunnel and/or the third tunnel comprises at least one of the following:
guaranteeing that a sum of a delay overhead of the second tunnel and a delay overhead of the third tunnel does not exceed twice a first delay budget of the second object, or does not exceed a round-trip delay budget of the second object;
in a case that an overhead of the second tunnel exceeds a delay budget of the second tunnel, guaranteeing that the sum of the delay overhead of the second tunnel and the delay overhead of the third tunnel does not exceed the round-trip delay budget of the second object;
in a case that a delay overhead of the third tunnel exceeds a delay budget of the third tunnel, guaranteeing that a sum of the uplink delay overhead of the first tunnel and the delay overhead of the third tunnel does not exceed the round-trip delay budget of the second object;
performing resource allocation and data scheduling according to the first QoS configuration;
mapping uplink data of the service to a second data tunnel; and
mapping downlink data of the service to a third data tunnel.

44. A communication device, wherein the communication device is a fifth communication device, comprising:
a fourth obtaining module, configured to obtain fifth information, wherein the fifth information comprises a result of delay monitoring; and
a fourth processing module, configured to perform a fifth operation according to the fifth information, wherein the fifth operation comprises at least one of the following:
generating or updating an uplink delay requirement and/or a downlink delay requirement for a service data flow;
generating or updating an uplink delay budget and/or a downlink delay budget of a first tunnel; and
generating or updating a delay budget of a second tunnel and/or a delay budget of a third tunnel;
wherein
the first tunnel is usable for transmitting uplink data and/or downlink data of the service;
the second tunnel is used for transmitting the uplink data of the service; and
the third tunnel is used for transmitting the downlink data of the service.

45. A communication device, comprising a processor, a memory, and a computer program stored in the memory and capable of running on the processor, wherein when the computer program is executed by the processor, the steps of the QoS control method according to any one of claims 1 to 17 are implemented, or the steps of the QoS control method according to any one of claims 18 to 20 are implemented, or the steps of the QoS control method according to any one of claims 21 to 30 are implemented, or the steps of the QoS control method according to any one of claims 31 to 34 are implemented, or the steps of the QoS control method according to any one of claims 35 to 39 are implemented.

46. A readable storage medium, wherein a computer program is stored in the computer-readable storage medium, and when the computer program is executed by a processor, the steps of the QoS control method according to any one of claims 1 to 17 are implemented, or the steps of the QoS control method according to any one of claims 18 to 20 are implemented, or the steps of the QoS control method according to any one of claims 21 to 30 are implemented, or the steps of the QoS control method according to any one of claims 31 to 34 are implemented, or the steps of the QoS control method according to any one of claims 35 to 39 are implemented.
